# EUROPÄISCHE PATENTSCHRIFT

(11) **EP 4 587 150 B1**
(45) Veröffentlichungstag und Bekanntmachung des Hinweises auf die Patenterteilung: **14.01.2026**
(21) Anmeldenummer: 24769256.9
(22) Anmeldetag: 30.08.2024
(51) Int. Cl.: B01D 35/30, B01D 46/00

(54) **FLUIDMODUL MIT BAJONETT-VERSCHLUSS UND EINE RÜCKDREHSICHERUNG**
FLUID MODULE WITH BAYONET LOCK AND ANTI-ROTATION LOCK
MODULE DE FLUIDE AVEC FERMETURE À BAÏONNETTE ET SÉCURITÉ ANTI-RETOUR

(30) Priorität: 01.09.2023 DE 102023123609
(43) Veröffentlichungstag der Anmeldung: 23.07.2025
(73) Patentinhaber: A. u. K. Müller GmbH & Co. KG, 40595 Düsseldorf (DE)
(72) Erfinder: BERGER, Gerd, 40595 Düsseldorf (DE)
(74) Vertreter: Feder Walter Ebert
(86) Internationale Anmeldenummer: PCT/DE2024/100765
(87) Internationale Veröffentlichungsnummer: WO 2025/045315

(56) Entgegenhaltungen:
- DE-A1- 19 960 600
- US-A1- 2009 242 470
- US-A1- 2010 236 653
- US-B2- 10 898 832

## Beschreibung

Die vorliegende Erfindung betrifft ein Fluidmodul zur Verwendung in einem Fluidsystem, mit einer von einem Fluid durchströmbaren Fluidführungseinheit, welche einen anströmseitigen Einlauf, einen abströmseitigen Auslauf und einen sich dazwischen erstreckenden Strömungskanal aufweist, und einer Funktionseinheit, die über eine Montageschnittstelle mit dem Strömungskanal strömungsverbunden ist.

Weitere Gegenstände der Erfindung bilden ein Fluidmodul-System mit mindestens einer Fluidführungseinheit und unterschiedlichen Funktionseinheiten zur Umsetzung unterschiedlicher Funktionen in einem Fluidsystem, wobei die unterschiedlichen Funktionseinheiten wahlweise mit der Fluidführungseinheit zur Bildung eines Fluidmoduls verbindbar sind, und ein Verfahren zur Verbindung einer Funktionseinheit und einer Fluidführungseinheit zu einem Fluidmodul.

Fluidmodule dieser Art werden in verschiedenen Bereichen der Technik verwendet, um unterschiedliche Funktionen in einem Fluidsystem, wie beispielsweise einem industriellen Leitungssystem, einem Rohrleitungssystem eines Gebäudes oder einem Wasserleitungssystem einer Espresso-Maschine, umzusetzen. Zu diesen unterschiedlichen Funktionen können beispielsweise die Filtrierung des Fluids, die Messung von Eigenschaften des Fluids oder des Fluidstroms sowie die Steuerung, Begrenzung, Blockierung oder Freigabe des Fluidstroms zählen. DE 199 60 600 A1, US 2009/242470 A1, US 10 898 832 B2 und US 2010/236653 A1 sind relevante Dokumente aus dem Stand der Technik.

Um seine jeweilige Funktion in dem Fluidsystem umsetzen zu können, umfasst das Fluidmodul eine Fluidführungseinheit und eine Funktionseinheit.

Mit der Fluidführungseinheit wird das Fluidmodul in das Fluidsystem eingebracht. Zu diesem Zweck weist die Fluidführungseinheit einen anströmseitigen Einlauf, einen abströmseitigen Auslauf und einen sich zwischen dem Einlauf und dem Auslauf erstreckenden und diese miteinander verbindenden Strömungskanal auf, so dass die Fluidführungseinheit von dem im Fluidsystem enthaltenen Fluid durchströmt werden kann. Die Fluidführungseinheit bildet nach dem Einbringen in das Fluidsystem somit einen Teil des Fluidsystems, welches das Fluid führt.

Mit der Funktionseinheit kann das Fluidmodul, abhängig von der umzusetzenden Funktion, mit dem durch die Fluidführungseinheit geführten Fluid oder dem Fluidstrom wechselwirken oder auf diese einwirken, um die jeweilige Funktion umzusetzen.

Damit die Funktionseinheit ihre Funktion umsetzen und mit dem Fluid wechselwirken oder auf dieses einwirken kann, ist die Funktionseinheit über eine Montageschnittstelle mit dem Strömungskanal strömungsverbunden. Auf diese Weise kann die Funktionseinheit von dem durch den Strömungskanal strömenden Fluid angeströmt, umströmt oder durchströmt werden, um die Umsetzung der Funktion, beispielsweise nach Art eines angeströmten Sensors, eines angeströmten Schließelements eines Ventils, eines umströmten Durchflussmessers oder eines durchströmten Filters, zu ermöglichen.

Bei den bislang bekannten Fluidmodulen weist die Montageschnittstelle, welche die Funktionseinheit mit dem Strömungskanal strömungsverbindet und sie daher zugleich an der Fluidführungseinheit befestigt, Schraubverbindungen auf. Diese mehrere in die Fluidführungseinheit oder durch diese hindurchragende Schrauben umfassenden Schraubverbindungen erfordern den Einsatz von Hilfsmitteln, z. B. Schraubendrehern oder Schraubenschlüssel, sowohl bei der Montage als auch beim Lösen der Funktionseinheit, welches für die Wartung des Fluidmoduls und zum Austausch von Verschleißteilen erforderlich ist. Da die Schrauben zudem einzeln festgezogen oder gelöst werden müssen, stellen die Montage und das Lösen der Funktionseinheit sehr arbeitsaufwendige Prozesse dar.

Zudem können innerhalb des Fluidsystems oder bei der Betätigung der Funktionseinheit Vibrationen auftreten, welche im Zeitverlauf zu einem Lösen der Schraubverbindungen führen können. Um ein solches unbeabsichtigtes Lösen zu verhindern, ist es bei den bekannten Fluidmodulen erforderlich, die Schraubverbindungen in regelmäßigen Abständen nachzuziehen oder zusätzlich zu montierende Kontermuttern zu verwenden. Dadurch wird die Verwendung und Montage des Fluidmoduls noch aufwendiger.

Bei der initialen oder einer späteren Montage nach einer Wartung ist es bei den bekannten Fluidmodulen außerdem erforderlich, die Gewindegänge mit den Schrauben im korrekten Winkel zu treffen und die Schrauben gleichmäßig mit einem vorgegebenen Drehmoment anzuziehen. Wird ein Gewindegang der Fluidführungseinheit nicht korrekt getroffen, kann die Schraube den Gewindegang beschädigen oder zerstören. Das zur Abdichtung erforderliche Drehmoment kann in diesem Fall nicht mehr erzielt werden, so dass das Fluidmodul undicht ist und gänzlich getauscht werden muss, was mit einem erheblichen Arbeits-, Material- und Zeitaufwand verbunden ist.

Die **Aufgabe** der vorliegenden Erfindung liegt daher darin, eine handhabungstechnisch einfache, schnell herzustellende und zugleich gegen ein unbeabsichtigtes Lösen gesicherte Verbindung der Fluidführungseinheit mit der Funktionseinheit zu ermöglichen.

Diese Aufgabe wird bei einem Fluidmodul der eingangs genannten Art dadurch **gelöst,** dass die Montageschnittstelle einen Bajonett-Verschluss und eine Rückdrehsicherung zur werkzeuglosen Befestigung und Sicherung der Funktionseinheit an der Fluidführungseinheit nach dem Gegenstand von Ansprüchen 1-13 aufweist.

Die Montageschnittstelle ermöglicht mit dem Bajonett-Verschluss die Befestigung der Funktionseinheit an der Fluidführungseinheit ohne zusätzliche Werkzeuge. Im Vergleich zu Schraubverbindungen ist diese Montageschnittstelle durch den Bajonett-Verschluss weniger anfällig für Montagefehler und Beschädigungen. Mit der Rückdrehsicherung sichert die Montageschnittstelle die an der Fluidführungseinheit befestigte Funktionseinheit gegen ein unbeabsichtigtes Lösen, insbesondere durch ein Verdrehen der relativ zueinander beweglichen Bestandteile des Bajonett-Verschlusses entlang einer entgegen der Schließrichtung des Bajonett-Verschlusses gerichteten Sicherungsrichtung der Rückdrehsicherung. Die Funktionseinheit kann mittels der Montageschnittstelle einfach und schneller an der Fluidführungseinheit befestigt und gesichert werden.

Die Fluidführungseinheit und die Funktionseinheit können jeweils ein Gehäuseteil eines mehrteiligen, insbesondere zweiteiligen, Gehäuses des Fluidmoduls bilden.

Bevorzugt weist die Montageschnittstelle mindestens zwei Schnittstellenteile auf. Ein erstes Schnittstellenteil kann der Fluidführungseinheit zugeordnet sein, insbesondere als Teil der Fluidführungseinheit ausgestaltet sein. Ein zweites Schnittstellenteil kann der Funktionseinheit zugeordnet sein, insbesondere als Teil der Funktionseinheit ausgestaltet sein. Zur Befestigung und Sicherung der Funktionseinheit an der Fluidführungseinheit können die Schnittstellenteile zusammenwirken. Insbesondere können die Schnittstellenteile zur Erzielung der Befestigung und Sicherung relativ zueinander beweglich sein.

Gemäß einer vorteilhaften Ausgestaltung wird vorgeschlagen, dass die Rückdrehsicherung, insbesondere werkzeuglos, lösbar ist. Die lösbare Rückdrehsicherung kann ein Lösen der Funktionseinheit von der Fluidführungseinheit ermöglichen. Die Wartung und Instandhaltung des Fluidmoduls, insbesondere der Austausch von innenliegenden Verschleißteilen des Fluidmoduls, kann auf diese Weise vereinfacht werden. Eine werkzeuglos lösbare Rückdrehsicherung kann ein handhabungstechnisch einfaches und schnelles Entsichern und Lösen ermöglichen.

Bevorzugt weist der Strömungskanal einen Aufnahmebereich zur Aufnahme der Funktionseinheit entlang einer Aufnahmeachse auf. Mit seinem Aufnahmebereich kann der Strömungskanal die Funktionseinheit derart, insbesondere teilweise, aufnehmen, dass sie zur Umsetzung der mit ihr zu erzielenden Funktion mit dem sich im Strömungskanal befindlichen Fluid wechselwirken und/oder auf dieses einwirken kann. Um die Funktionseinheit entlang der Aufnahmeachse aufnehmen zu können, kann der Aufnahmebereich eine Aufnahmeöffnung aufweisen, durch welche die Funktionseinheit von außen in die Fluidführungseinheit eintreten kann.

Gemäß einer konstruktiven Ausgestaltung wird vorgeschlagen, dass die Rückdrehsicherung entlang der Aufnahmeachse axial beabstandet zum Bajonett-Verschluss angeordnet ist. Durch die axiale Beabstandung der Rückdrehsicherung relativ zum Bajonett-Verschluss kann die Befestigungsfunktion der Montageschnittstelle baulich von ihrer Sicherungsfunktion getrennt sein. Eine unbeabsichtigte gegenseitige Beeinträchtigung des zur Befestigung dienenden Bajonett-Verschlusses und der zur Sicherung dienenden Rückdrehsicherung kann durch diese bauliche Beabstandung vermieden werden.

Die Rückdrehsicherung weist einen im Wesentlichen entlang einer, insbesondere parallel zur Aufnahmeachse verlaufenden, Einschnapprichtung beweglichen Schnapphaken und mindestens eine den Schnapphaken zugeordnete Einschnappausnehmung zur formschlüssigen Aufnahme des Schnapphakens auf.

Der bewegliche Schnapphaken kann entlang der Einschnapprichtung in die Einschnappausnehmung einschnappen. Dabei kann der Schnapphaken von der Einschnappausnehmung formschlüssig aufgenommen werden. Durch das Einschnappen des Schnapphakens in die Einschnappausnehmung kann die Montageschnittstelle und insbesondere der Bajonett-Verschluss gegen ein die Befestigung lösendes Verdrehen entlang einer, insbesondere der Schließrichtung des Bajonett-Verschlusses entgegengesetzten, Sicherungsrichtung gesichert werden. Mit einer parallel zur Aufnahmeachse verlaufenden Einschnapprichtung kann eine zur Betätigung der Sicherung erfolgende Bewegung des Schnapphakens erzielt werden, welche im Wesentlichen quer zur um die Aufnahmeachse verlaufenden Schließrichtung des Bajonett-Verschlusses und/oder der Sicherungsrichtung der Rückdrehsicherung erfolgt. Auf diese Weise können die von der Rückdrehsicherung entlang der Sicherungsrichtung aufgenommenen Kräfte keine Bewegung des Schnapphakens entlang oder entgegen der quer hierzu stehenden Einschnapprichtung bewirken, so dass die Rückdrehsicherung durch die aufgenommenen Kräfte nicht gelöst wird. Einem derartigen unbeabsichtigten Lösen der Rückdrehsicherung kann auf diese Weise vorgebeugt werden.

In vorteilhafter Weise entspricht die Anzahl der Einschnappausnehmungen der Anzahl der Verschluss-Nasen des Bajonett-Verschlusses. Auch in dem Fall, dass die Rückdrehsicherung nur einen einzelnen Schnapphaken aufweist, kann auf diese Weise eine Sicherung gegen ein Zurückdrehen für sämtliche durch den Bajonett-Verschluss ermöglichten Montagestellungen der Funktionseinheit relativ zur Fluidführungseinheit ermöglicht werden.

Es kann konstruktiv vorgesehen sein, dass der Schnapphaken der Fluidführungseinheit oder der Funktionseinheit zugeordnet, insbesondere an ihr angeordnet, ist und die Einschnappausnehmung der Funktionseinheit oder der Fluidführungseinheit zugeordnet, insbesondere an ihr angeordnet, ist.

Eine weitere Ausgestaltung sieht vor, dass die Einschnappausnehmung eine Ausnehmung einer drehbeweglich angeordneten, insbesondere als Überwurfmutter ausgestalteten, Befestigungskappe ist. Die Befestigungskappe kann ein Teil der Funktionseinheit oder der Fluidführungseinheit sein. Insbesondere kann die Befestigungskappe gegenüber den übrigen Teilen der Funktionseinheit bzw. der Fluidführungseinheit drehbeweglich sein. Eine drehbewegliche Befestigungskappe kann eine Betätigung der Rückdrehsicherung ermöglichen, auch wenn die relative Lage der übrigen Teile der Funktionseinheit oder der Fluidführungseinheit relativ zur Fluidführungseinheit bzw. zur Funktionseinheit nicht bewegt werden soll. Alternativ kann eine drehbewegliche Befestigungskappe die Ausrichtung der Funktionseinheit relativ zur Fluidführungseinheit auch nach der Befestigung und Sicherung ermöglichen, insbesondere durch ein Drehen der Funktionseinheit um die Aufnahmeachse.

Gemäß einer konstruktiven Ausgestaltung wird vorgeschlagen, dass die Befestigungskappe zusätzlich zur Einschnappausnehmung einen Teil des Bajonett-Verschlusses, insbesondere Verschluss-Aussparungen zur Aufnahme von Verschluss-Nasen des Bajonett-Verschlusses, aufweist. Durch eine Betätigung der Befestigungskappe, insbesondere in Form einer Drehbewegung um die Aufnahmeachse, kann auf diese Weise ein zeitgleiches Verschließen des Bajonett-Verschlusses und Betätigen der Rückdrehsicherung erzielt werden.

Bei einer vorteilhaften Ausgestaltung weist der Schnapphaken einen, sich insbesondere parallel zur Aufnahmeachse erstreckenden Einschnappvorsprung auf, welcher beim Einschnappen in die Einschnappausnehmung eintreten kann. Mit dem in die Einschnappausnehmung eingetretenen Einschnappvorsprung kann der Schnapphaken derart mit der Einschnappausnehmung zusammenwirken, dass ein ungewolltes Verdrehen entlang der Sicherungsrichtung verhindert wird. Der Einschnappvorsprung kann eine entgegen der Sicherungsrichtung liegende und als Sicherungsfläche dienende Stirnseite aufweisen, welche im Wesentlichen quer zur Sicherungsrichtung verläuft. Mit dieser Sicherungsfläche kann der Einschnappvorsprung in seiner in die Einschnappausnehmung eingetretenen Position an einer als weitere Sicherungsfläche dienenden Gegenfläche der Einschnappausnehmung anliegen. Eine relative Bewegung der Schnittstellenteile der Montageschnittstelle, insbesondere eine Bewegung der Befestigungskappe, entlang der Sicherungsrichtung kann mit diesen Sicherungsflächen formschlüssig verhindert werden.

In vorteilhafter Weise ist der Schnapphaken schwenkbar oder biegbar an der Fluidführungseinheit oder der Funktionseinheit angeordnet. Ein schwenkbar oder biegbar angeordneter Schnapphaken kann auf einfache Art und Weise entlang der Einschnapprichtung in die Einschnappausnehmung eintreten und so einschnappen. Der Schnapphaken kann nach Art eines einseitig gelagerten oder an einem Ende an der Fluidführungseinheit oder der Funktionseinheit angeordneten Kragarms ausgestaltet sein.

In diesem Zusammenhang hat es sich als vorteilhaft erwiesen, wenn der Schnapphaken einstückig mit der Fluidführungseinheit oder der Funktionseinheit ausgestaltet ist. Ein einstückig mit der Fluidführungseinheit oder der Funktionseinheit ausgestalteter Schnapphaken ermöglicht eine fertigungstechnisch und montagetechnisch einfache Herstellung eines Fluidmoduls.

Ferner kann es vorteilhaft sein, wenn der Schnapphaken einen, insbesondere quer zur Aufnahmeachse hervorstehenden, Betätigungsvorsprung zum manuellen Ausrücken des Schnapphakens aus der Einschnappausnehmung aufweist. Über den Betätigungsvorsprung kann von fluidmodulaußen eine manuelle Kraft zum Ausrücken des Schnapphakens aus der Einschnappausnehmung auf den Schnapphaken ausgeübt werden. Durch diese manuelle Kraftausübung von fluidmodulaußen kann die Rückdrehsicherung gelöst und ein Öffnen des Bajonett-Verschlusses ermöglicht werden. Das manuelle Ausrücken des Schnapphakens aus der Einschnappausnehmung erfolgt vorzugsweise entgegen der Einschnapprichtung, so dass die Einschnappausnehmung vom Schnapphaken freigegeben wird.

Gemäß einem weiteren Ausführungsbeispiel der Erfindung weist das Fluidmodul einen Überbiegschutz zur Verhinderung eines Überbiegens des Schnapphakens, insbesondere entgegen der Einschnapprichtung, auf. Mit dem Überbiegschutz kann ein Überbiegen des Schnapphakens, insbesondere eine plastische Verformung oder eine Beschädigung des Schnapphakens, verhindert werden. Zur Verhinderung des Überbiegens des Schnapphakens kann der Überbiegschutz den axialen Bewegungsraum des Schnapphakens entgegen der Einschnapprichtung und/oder parallel zur Aufnahmeachse begrenzen.

In diesem Zusammenhang hat es sich als vorteilhaft erwiesen, wenn der Überbiegschutz als ein dem Schnapphaken zugeordneter Anschlag, insbesondere der Fluidführungseinheit oder der Funktionseinheit, ausgestaltet ist. Mit einem dem Schnapphaken zugeordneten Anschlag kann der Bewegungsraum des Schnapphakens auf einfache Art und Weise begrenzt und ein Überbiegen des Schnapphakens verhindert werden. Der Anschlag kann derart angeordnet sein, dass er ein weiteres Biegen des Schnapphakens verhindert, sobald der Schnapphaken, insbesondere das den Einschnappvorsprung tragende Ende des Schnapphakens, an dem Anschlag anliegt. Abhängig vom Material des Schnapphakens kann der Anschlag derart positioniert sein, dass sich der gebogene und am Anschlag anliegende Schnapphaken noch im elastischen Verformungsbereich seines Materials befindet.

In einer vorteilhaften Ausgestaltung sind der Schnapphaken und der Anschlag des Überbiegschutzes gemeinsam an der Fluidführungseinheit oder der Funktionseinheit angeordnet, insbesondere einstückig mit dieser ausgestaltet.

Gemäß einem Ausführungsbeispiel der Erfindung weist die Rückdrehsicherung eine Ausrücksicherung gegen ein überlastbedingtes unzulässiges Ausrücken von Komponenten der Rückdrehsicherung, insbesondere des Schnapphakens aus der Einschnappausnehmung, auf. Durch die Ausrücksicherung kann ein überlastbedingtes unzulässiges Ausrücken der Komponenten der Rückdrehsicherung, bei welcher durch eine in Sicherungsrichtung erfolgende Krafteinwirkung mindestens eine dieser Komponenten quer zur Sicherungsrichtung, insbesondere in Richtung der Aufnahmeachse oder von der Aufnahmeachse weg, aus einer anderen Komponente der Rückdrehsicherung ausrückt, verhindert werden. Ein Lösen der Rückdrehsicherung durch ein derartiges überlastbedingtes unzulässiges Ausrücken kann auf diese Weise verhindert werden.

In vorteilhafter Weise kann die Ausrücksicherung die Bewegungsfreiheitsgrade des Schnapphakens reduzieren. Eine Reduzierung der Bewegungsfreiheitsgrade des Schnapphakens kann insbesondere die Bewegungsmöglichkeiten des Schnapphakens quer zur Aufnahmeachse reduzieren, insbesondere auf null. Durch die Reduzierung der Bewegungsfreiheitsgrade des Schnapphakens quer zur Aufnahmeachse auf null können radial erfolgende Bewegungen des Schnapphakens verhindert werden.

In diesem Zusammenhang hat es sich als vorteilhaft erwiesen, wenn die Ausrücksicherung zur Blockierung einer Bewegung des Schnapphakens entlang einer, insbesondere von der Aufnahmeachse wegweisenden, Rastrichtung ausgestaltet ist. Ein Lösen der Rückdrehsicherung durch ein unzulässiges Ausrücken des Schnapphakens entlang der Rastrichtung kann auf diese Weise verhindert werden. Bevorzugt verläuft die Rastrichtung quer, d. h. im Wesentlichen rechtwinklig, zur Aufnahmeachse.

Eine weitere Ausgestaltung sieht vor, dass die Rastrichtung quer zur Einschnapprichtung verläuft. Durch den quer zur Einschnapprichtung stehenden Verlauf der Rastrichtung kann eine Beeinflussung der durch die Rückdrehsicherung erzielten Sicherung gegen ein Rückdrehen und Lösen des Verschlusses durch die Ausrücksicherung vermieden werden. Insbesondere kann die Blockierung der Bewegung des Schnapphakens durch die Ausrücksicherung auf diese Weise derart erfolgen, dass die Bewegungsmöglichkeiten des Schnapphakens entlang der Einschnapprichtung durch die Ausrücksicherung nicht beeinträchtigt werden.

Besonders bevorzugt verlaufen die Rastrichtung und die Einschnapprichtung quer zur, insbesondere radial verlaufenden, Sicherungsrichtung der Rückdrehsicherung.

In Weiterbildung der Erfindung wird vorgeschlagen, dass die Ausrücksicherung eine Rastkontur des Schnapphakens und eine Rastkontur der Einschnappausnehmung umfasst, welche komplementär zueinander ausgestaltet sind. Mit diesen Rastkonturen können der Schnapphaken und die Einschnappausnehmung derart aneinander verrasten, dass ein unzulässiges Ausrücken dieser Komponenten der Rückdrehsicherung, insbesondere entlang der Rastrichtung, verhindert wird. Während des Einrastens kann die eine Rastkontur in die andere Rastkontur eingreifen, diese umgreifen oder beide Rastkonturen können ineinander eingreifen oder einander umgreifen. Eine weitere Ausgestaltung sieht vor, dass die Rastkontur des Schnapphakens an dem Einschnappvorsprung und/oder die Rastkontur der Einschnappausnehmung an der dem Einschnappvorsprung zugewandten Oberfläche der Einschnappausnehmung angeordnet ist. Durch die Anordnung der Rastkontur am Einschnappvorsprung und/oder der dem Einschnappvorsprung zugewandten Oberfläche der Einschnappausnehmung kann das Verrasten der Komponenten der Ausrücksicherung während des Einschnappens des Schnapphakens in die Einschnappausnehmung erfolgen. Die Rastkonturen können dabei entlang der Einschnapprichtung aufeinander zubewegt werden.

In vorteilhafter Weise sind die Rastkonturen auf einander zugewandten Stirnseiten des Schnapphakens und der Einschnappausnehmung angeordnet, welche insbesondere als Sicherungsflächen der Rückdrehsicherung dienen. Diese Stirnseiten des Schnapphakens und der Einschnappausnehmung können im Wesentlichen parallel zueinander und/oder im Wesentlichen quer zur Sicherungsrichtung verlaufen.

Ferner kann es vorteilhaft sein, wenn die Rastkontur auf der dem Einschnappvorsprung zugewandten Oberfläche der Einschnappausnehmung relativ zum, insbesondere gesamten, Einschnappvorsprung entlang der Rastrichtung radialinnen oder radialaußen liegt. Auf diese Weise kann die Rastkontur der Einschnappausnehmung den Einschnappvorsprung entlang der Rastrichtung radialinnen oder radialaußen hintergreifen oder beidseitig umgreifen.

In einer vorteilhaften Ausgestaltung sind die Rastkonturen entlang einer quer zur Aufnahmeachse verlaufenden Rastrichtung miteinander, insbesondere formschlüssig, verrastbar. Durch das miteinander Verrasten der Rastkonturen entlang der quer zur Aufnahmeachse verlaufenden Rastrichtung kann ein unzulässiges Ausrücken entlang dieser Rastrichtung auf einfache Weise durch die miteinander verrasteten Rastkonturen verhindert werden.

Insbesondere durch ein formschlüssiges Verrasten der Rastkonturen miteinander kann eine zuverlässige Sicherung gegen ein unzulässiges Ausrücken erzielt werden.

In diesem Zusammenhang hat es sich als vorteilhaft erwiesen, wenn die Rastrichtung quer zu einer Sicherungsrichtung, entlang welcher ein Zurückdrehen des Bajonett-Verschlusses durch die Rückdrehsicherung verhinderbar ist, verläuft.

In einer weiteren Ausführungsform der Erfindung hintergreift die Rastkontur des Schnapphakens die Rastkontur der Einschnappausnehmung entlang der Rastrichtung strömungskanalseitig und/oder strömungskanalabgewandt. Auf diese Weise kann eine Sicherung gegen ein unzulässiges Ausrücken des Schnapphakens in Richtung des Strömungskanals oder vom Strömungskanal weg erzielt werden.

Ferner kann die Rastkontur der Einschnappausnehmung im verrasteten Zustand der Ausrücksicherung die Rastkontur des Schnapphakens, insbesondere den gesamten Einschnappvorsprung, entlang der Rastrichtung überdecken. Die Rastkontur der Einschnappausnehmung kann insbesondere die gesamte von der Aufnahmeachse wegweisende Seite des Einschnappvorsprungs verdecken. Auf diese Weise kann ein direkter Zugriff auf den Schnappvorsprung von außerhalb des Fluidmoduls sowie ein Ausrücken des Schnapphakens nach fluidmodulaußen verhindert werden.

Eine weitere Ausgestaltung sieht vor, dass die Rastkontur des Schnapphakens derart ausgestaltet ist, dass sie die Rastkontur der Einschnappausnehmung aufnehmen kann, und/oder dass die Rastkontur der Einschnappausnehmung derart ausgestaltet ist, dass sie die Rastkontur des Schnapphakens aufnehmen kann. Beim Aufnehmen kann die Rastkontur derart zur anderen Rastkontur angeordnet sein, dass sie diese entlang der Rastrichtung beidseitig begrenzt und diese insbesondere radialinnen und radialaußen umschließt.

Weiter vorteilhaft ist es, wenn die Rastkontur des Schnapphakens einen Rastvorsprung und die Rastkontur der Einschnappausnehmung eine Rastausnehmung aufweist und/oder die Rastkontur der Einschnappausnehmung einen Rastvorsprung und die Rastkontur des Schnapphakens eine Rastausnehmung aufweist. Mit einem Rastvorsprung und einer Rastausnehmung kann die Kontaktfläche der beiden Rastkonturen erhöht werden, um eine noch zuverlässigere Sicherung gegen ein Ausrücken zu erzielen. Der Rastvorsprung kann gegenüber den restlichen Teilen der Rastkontur hervorragen, insbesondere entlang oder entgegen der Sicherungsrichtung. Die Rastausnehmung kann gegenüber den restlichen Teilen der Rastkontur eine Ausnehmung der Rastkontur darstellen, insbesondere relativ zu diesen weniger weit entlang oder entgegen der Sicherungsrichtung hervorragen. Der Rastvorsprung und die Rastausnehmung können quer zur Rastrichtung verlaufen.

In vorteilhafter Weise sind der Rastvorsprung und die ihm zugeordnete Rastausnehmung komplementär zueinander ausgestaltet. Durch die komplementäre Ausgestaltung des Rastvorsprungs und der Rastausnehmung kann ein zuverlässiges und sicheres Verrasten dieser sichergestellt werden.

Bevorzugt weisen die Rastkontur des Schnapphakens und die Rastkontur der Einschnappausnehmung jeweils abwechselnd angeordnete Rastvorsprünge und Rastausnehmungen auf. Indem die Rastkonturen abwechselnd angeordnete Rastvorsprünge und Rastausnehmungen aufweisen, können der Schnapphaken und die Einschnappausnehmung in einer verzahnenden Art und Weise miteinander verrastet werden. Die Sicherung gegen ein unzulässiges Ausrücken kann durch dieses verzahnende Verrasten zusätzlich verbessert werden.

Gemäß einer weiteren Ausgestaltung der Erfindung ist im Strömungskanal ein, insbesondere einstückig mit der Fluidführungseinheit ausgestalteter, Ventilsitz angeordnet. Der Ventilsitz kann insbesondere im Bereich des Aufnahmebereichs der Fluidführungseinheit angeordnet sein, so dass dieser mit der Funktionseinheit zur Umsetzung deren Funktion im Fluidsystem zusammenwirken kann. Vorzugsweise umschließt der Ventilsitz die Aufnahmeachse umfänglich, so dass er auf besonders einfache Art und Weise mit der entlang der Aufnahmeachse von der Fluidführungseinheit aufgenommenen Funktionseinheit zusammenwirken kann. Der Ventilsitz kann derart im Strömungskanal angeordnet sein, dass er von einem vom Einlauf zum Auslauf strömenden Fluid von radialaußen angeströmt und radial innenliegend durchströmt werden kann oder er von radial innenliegend angeströmt und radial außenliegend umströmt werden kann.

Gemäß einer konstruktiven Ausgestaltung wird vorgeschlagen, dass die Fluidführungseinheit als einstückiges Gehäuseteil ausgestaltet ist. Durch die Ausgestaltung als einstückiges Gehäuseteil des Fluidmoduls kann die Fluidführungseinheit eine handhabungstechnisch einfache Montage des Fluidmoduls ermöglichen. Der Schnapphaken, die Verschluss-Nasen und/oder der Ventilsitz können einstückig mit der Fluidführungseinheit ausgestaltet sein.

Im Einlauf und/oder Auslauf kann ein Verbindungsmittel zur Verbindung mit Leitungen des Fluidsystems und/oder ein Dichtmittel zur Abdichtung einer Verbindung angeordnet sein. Mit einem, insbesondere als eine selbstarretierende Leitungssteckaufnahme ausgestaltetes, Verbindungsmittel, kann auf einfache Weise eine Verbindung mit einer Leitung des Fluidsystems erzielt und die Fluidführungseinheit in das Fluidsystem eingebunden werden. Ein alternativ oder zusätzlich im Einlauf und/oder Auslauf vorgesehenes Dichtmittel kann einen Fluidverlust im Übergang zwischen der Leitung und der Fluidführungseinheit verhindern.

In einer weiteren Ausführungsform der Erfindung weist die Funktionseinheit ein, insbesondere teilweise, im Aufnahmebereich angeordnetes Funktionselement auf. Zur Umsetzung der mit der Funktionseinheit zu erzielenden Funktion kann das Funktionselement mit dem Fluid, der Fluidführungseinheit und/oder dem Ventilsitz wechselwirken oder zusammenwirken. Das Funktionselement kann dabei jene Komponente der Funktionseinheit sein, welche von einem Fluid angeströmt, umströmt und/oder durchströmt werden kann.

In diesem Zusammenhang hat es sich als vorteilhaft erwiesen, wenn das Funktionselement ein Schließelement zum Öffnen und Schließen des Strömungskanals, insbesondere eines Ventilsitzes, ist. Mit dem als Schließelement ausgestalteten Funktionselement kann die Funktionseinheit den Strömungskanal der Fluidführungseinheit gänzlich oder teilweise öffnen und gänzlich oder teilweise schließen, um so den Fluidfluss durch das Fluidmodul freizugeben, zu verhindern oder zu beschränken. Mit einem derart ausgestalteten Funktionselement kann das Fluidmodul die Funktion eines Ventils, eines Rückflussverhinderers und/oder einer Drossel umsetzen.

Bevorzugt weist das als Schließelement ausgestaltete Funktionselement einen Plunger, ein Schließmittel und/oder eine Ventilmembran auf.

Eine weitere Ausgestaltung sieht vor, dass das Funktionselement ein Filter ist. Mit dem Filter können Partikel aus dem Fluid herausgefiltert werden. Der Filter kann insbesondere derart ausgestaltet sein, dass er während der Montage des Fluidmoduls über einen Ventilsitz der Fluidführungseinheit gestülpt werden kann. Ein derart über den Ventilsitz gestülpter Filter kann auf diese Weise im Strömungskanal angeordnet und einseitig, insbesondere allein, durch die Fluidführungseinheit, insbesondere einen den Ventilsitz tragenden Vorsprung, gestützt sein. Dank der Montageschnittstelle mit dem Bajonett-Verschluss und der Rückdrehsicherung kann der Filter durch Lösen der Funktionseinheit auf einfache Weise aus dem Fluidmodul entnommen werden, um beispielsweise gereinigt oder ausgetauscht zu werden.

Gemäß einer weiteren Ausgestaltung weist das Funktionselement eine Magnetfalle auf. Mittels der Magnetfalle kann das Funktionselement magnetische Partikel aus dem Fluid anziehen und insbesondere aus dem Fluidstrom entfernen. Als besonders bevorzugt hat sich die Anordnung der Magnetfalle im Inneren eines Filters erwiesen. Durch diese Anordnung der Magnetfalle im Filter können während der Filtrierung auch kleinere magnetische Partikel aus dem Fluidstrom entfernt werden, welche den Filter aufgrund ihrer geringen Größe ansonsten passieren und daher nicht aus dem Fluid herausgefiltert würden.

Vorzugsweise weist die Funktionseinheit ein als Filter, insbesondere als Filter mit einer Magnetfalle, ausgestaltetes Funktionselement auf.

Bei einer weiteren Ausgestaltung weist die Funktionseinheit mindestens eine Magnetspule zur Betätigung des Funktionselements auf. Durch Bestromung der Magnetspule kann das Funktionselement im Aufnahmebereich der Fluidführungseinheit bewegt werden. Über die Magnetspule kann auf diese Weise das Fluidmodul elektromagnetisch betätigt werden. Insbesondere ein als Schließelement ausgestaltetes Funktionselement kann abhängig von der Bestromung der Magnetspule den Ventilsitz verschließen oder freigeben und so die Funktion der Funktionseinheit umsetzen.

Gemäß einer weiteren konstruktiv vorteilhaften Ausgestaltung ist eine Feder im Aufnahmebereich angeordnet. Die Feder kann derart angeordnet sein, dass sie das Funktionselement in Richtung einer Normalstellung vorspannt, welche das Funktionselement bei einer unbestromten Magnetspule einnehmen soll. Die Feder kann insbesondere derart angeordnet sein, dass sie der Magnetspule entgegenwirkt.

Bei einer vorteilhaften Ausgestaltung weist der Bajonett-Verschluss mehrere Verschluss-Nasen und mehrere Verschluss-Aussparungen auf. Die Verschluss-Aussparungen können derart ausgestaltet sein, dass sie die Verschluss-Nasen beim Schließen des Bajonett-Verschlusses aufnehmen können. Zur Aufnahme der Verschluss-Nasen durch die Verschluss-Aussparungen können die Verschluss-Nasen zunächst axial parallel zur Aufnahmeachse auf die Verschluss-Aussparungen zubewegt werden, wobei sich die Position der Verschluss-Nasen und der ihnen zugeordneten Verschluss-Aussparungen in Umfangsrichtung um die Aufnahmeachse unterscheiden. Nach der axialen Bewegung können die Verschluss-Nasen durch eine radiale Drehbewegung in die ihnen zugeordneten Verschluss-Aussparungen hineingedreht oder die Verschluss-Aussparungen durch eine radiale Drehbewegung über die Verschluss-Nasen geschoben werden. Auf diese Weise können die Verschluss-Nasen entlang der Aufnahmeachse axial fest mit den Verschluss-Aussparungen verbunden werden.

Die Aufnahme-Aussparungen können insbesondere als Teil eines funktionseinheitsseitigen Schnittstellenteils, bevorzugt der Befestigungskappe, insbesondere bevorzugt einstückig mit dieser, ausgestaltet sein.

Die Verschluss-Nasen können als Teil eines fluidführungseinheitsseitigen Schnittstellenteils ausgestaltet sein, insbesondere einstückig mit der Fluidführungseinheit ausgestaltet sein.

Gemäß einer konstruktiven Ausgestaltung wird vorgeschlagen, dass der Bajonett-Verschluss drei um im Wesentlichen 120° um die Aufnahmeachse zueinander winkelversetzt angeordnete Verschluss-Nasen aufweist. Durch die Verwendung dieser drei Verschluss-Nasen kann eine dreifache Auflage der Montageschnittstelle bei der Befestigung der Funktionseinheit an der Fluidführungseinheit erzielt werden. Durch diese dreifache Auflage kann eine geometrisch stabile Befestigung erzielt werden, mit welcher einem Winkelspiel der befestigten Funktionseinheit relativ zur Aufnahmeachse, d. h. insbesondere ein Wackeln dieser, vorgebeugt werden kann. Mit den um 120° winkelversetzten Verschluss-Nasen kann eine Befestigung der Funktionseinheit an der Fluidführungseinheit erzielt werden, welche ein relatives Verdrehen um einen Montagewinkel von 60° zur Herstellung der Befestigung erfordert oder ermöglicht. Auf diese Weise kann die Befestigung über einen weitreichenden Winkelbereich durchgeführt werden.

Bei einer konstruktiv vorteilhaften Ausgestaltung sind die Einschnappausnehmungen jeweils in Umfangsrichtung, insbesondere der Befestigungskappe, zwischen zwei benachbarten Verschluss-Aussparungen angeordnet. Entlang der Aufnahmeachse sind die Einschnappausnehmungen zu den Verschluss-Aussparungen axial beabstandet.

Bei einer bevorzugten Ausgestaltung weist der Bajonett-Verschluss Verschluss-Nasen mit Anlaufschrägen zum Heranziehen der Funktionseinheit an die Fluidführungseinheit beim Schließen des Bajonett-Verschlusses auf. Durch diese Anlaufschrägen kann die Funktionseinheit, insbesondere der untere Rand der Befestigungskappe, während des Schließens des Bajonett-Verschlusses in Richtung des Schnapphakens gedrückt werden, um diesen entgegen der Einschnapprichtung zu bewegen. Sobald der Bajonett-Verschluss geschlossen ist, kann der derart vorgespannte Schnapphaken entlang der Einschnapprichtung in die nunmehr mit ihm fluchtende Einschnappausnehmung einschnappen und die Rückdrehsicherung so schließen.

Vorzugsweise ist die Fluidführungseinheit aus einem Kunststoff, bevorzugt aus einem Hartkunststoff, insbesondere bevorzugt PPSU, gefertigt. Auf diese Weise kann das Fluidmodul die Hygieneerfordernisse für Anwendungen in Bereichen mit hohen Hygieneanforderungen erfüllen, wie beispielsweise die Verwendung in einer Espresso-Maschine oder anderen zur Zubereitung oder Verarbeitung von Lebensmitteln dienenden Fluidsystemen.

Gemäß einer vorteilhaften Ausgestaltung weist die Fluidführungseinheit zu Verbesserung der Druckbeständigkeit, insbesondere fluidmodulaußen angeordnete, Verstärkungsrippen auf. Die Fluidführungseinheit kann auf diese Weise druckbeständig ausgestaltet sein, insbesondere Drücke von bis zu 16 bar im Strömungskanal standhalten.

Bei einem Fluidmodul-System der eingangs genannten Art wird zur **Lösung** der vorstehend genannten Aufgabe vorgeschlagen, dass das wahlweise von einer der Funktionseinheiten und der Fluidführungseinheit gebildete Fluidmodul in der zuvor beschriebenen Weise ausgestaltet ist, wodurch sich die im Zusammenhang mit dem Fluidmodul beschriebenen Vorteile ergeben.

Das Fluidmodul-System kann dabei abhängig von der umzusetzenden Funktion in dem Fluidsystem genutzt werden, um das passende Fluidmodul zu bilden, welches eben jene Funktion umsetzt. Zu diesem Zwecke kann ein und dieselbe Fluidführungseinheit mit den unterschiedlichen Funktionen umsetzenden Funktionseinheiten kombiniert werden, so dass die für jeweilige Anwendung passende Funktionseinheit mit der Fluidführungseinheit zu einem Fluidmodul verbunden wird.

Die im Zusammenhang mit dem erfindungsgemäßen Fluidmodul beschriebenen Merkmale können einzeln oder in Kombination auch bei dem Fluidmodul-System zur Anwendung kommen. Es ergeben sich die gleichen Vorteile, welche bereits beschrieben wurden.

Hierüber hinaus kann das Fluidmodul-System auch unterschiedlich ausgestaltete Fluidführungseinheiten aufweisen, welche über identische Montageschnittstellen mit den unterschiedlichen Funktionseinheiten verbunden werden können. Diese unterschiedlichen Fluidführungseinheiten weisen vorzugsweise identisch ausgestaltete Schnittstellenteile sowie Aufnahmebereiche auf, so dass sie frei wählbar mit einem der unterschiedlichen Funktionseinheiten des Fluidmodul-Systems verbunden werden können.

Die unterschiedlichen Fluidführungseinheiten können sich insbesondere hinsichtlich der relativen Ausrichtung ihres Einlaufs und Auslaufs voneinander unterscheiden. Beispielsweise kann eine erste Fluidführungseinheit einen zum Einlauf fluchtenden Auslauf aufweisen, so dass diese in ein gradliniges Leitungsstück des Fluidsystems eingebunden werden kann. Eine zweite Fluidführungseinheit kann einen relativ zum Einlauf abgewinkelten Auslauf aufweisen, beispielsweise um 10°, 30°, 45° oder 90°, um in einem abgewinkelten Bereich des Fluidsystems eingebunden zu werden.

In Weiterbildung der Erfindung umfassen die unterschiedlichen Funktionseinheiten jeweils ein Funktionselement zur Umsetzung einer Funktion in einem Fluidsystem, welches sich von den Funktionselementen der anderen Funktionseinheiten unterscheidet. Indem die unterschiedlichen Funktionseinheiten unterschiedliche Funktionselemente aufweisen, können mit diesen auf einfache Art und Weise unterschiedliche Funktionen umgesetzt werden.

Bei einem Verfahren der eingangs genannten Art wird zur **Lösung** der vorstehend genannten Aufgabe vorgeschlagen, dass das Fluidmodul in der zuvor beschriebenen Weise ausgebildet ist, wobei die Funktionseinheit entlang der Aufnahmeachse auf die Fluidführungseinheit aufgesteckt wird, so dass die Funktionseinheit mit dem Strömungskanal strömungsverbunden ist, und die Fluidführungseinheit und die Funktionseinheit durch Betätigung des Bajonett-Verschlusses und der Rückdrehsicherung rückdrehsicher aneinander befestigt und gesichert werden.

Durch das Aufstecken entlang der Aufnahmeachse und Betätigen des Bajonett-Verschlusses, insbesondere entgegen der Sicherungsrichtung, wird die Funktionseinheit an der Fluidführungseinheit ohne zusätzliche Werkzeuge befestigt. Im Vergleich zu Schraubverbindungen wird mit dem Bajonett-Verschluss eine Verbindung hergestellt, welche weniger anfällig für Montagefehler und Beschädigungen ist. Durch Betätigen der Rückdrehsicherung sichert die Montageschnittstelle die an der Fluidführungseinheit befestigte Funktionseinheit gegen ein unbeabsichtigtes Lösen, insbesondere durch ein Verdrehen der relativ zueinander beweglichen Bestandteile des Bajonett-Verschlusses entgegen der Schließrichtung des Bajonett-Verschlusses. Die Funktionseinheit wird mit der Montageschnittstelle auf einfache und schnelle Art und Weise an der Fluidführungseinheit befestigt und gesichert.

Die im Zusammenhang mit dem erfindungsgemäßen Fluidmodul sowie dem erfindungsgemäßen Fluidmodul-System beschriebenen Merkmale können einzeln oder in Kombination auch bei dem Verfahren zur Anwendung kommen. Es ergeben sich die gleichen Vorteile, welche bereits beschrieben wurden.

Durch das Aufstecken der Funktionseinheiten entlang der Aufnahmeachse kann diese, insbesondere ihr Funktionselement, entlang der Aufnahmeachse in den Aufnahmebereich der Fluidführungseinheit eintreten.

Weiter vorteilhaft ist es, wenn die Rückdrehsicherung beim Schließen des Bajonett-Verschlusses selbsttätig eine Sicherungsposition einnimmt. In ihrer Sicherungsposition kann die Rückdrehsicherung ein Zurückdrehen der Schnittstellenteile der Montageschnittstelle entlang einer Sicherungsrichtung verhindern. Die Rückdrehsicherung kann ihre Sicherungsposition durch ein Einschnappen, insbesondere durch ein Einschnappen eines Schnapphakens in eine Einschnappausnehmung, einnehmen.

Weitere Einzelheiten und Vorteile eines erfindungsgemäßen Fluidmoduls, eines erfindungsgemäßen Fluidmodul-Systems sowie des erfindungsgemäßen Verfahrens sollen nachfolgend anhand der in den Figuren schematisch dargestellten Ausführungsbeispiele der Erfindung exemplarisch erläutert werden. Darin zeigt:
- Fig. 1: ein erfindungsgemäßes Fluidmodul gemäß einem ersten Ausführungsbeispiel,
- Fig. 2: ein erfindungsgemäßes Fluidmodul gemäß einem zweiten Ausführungsbeispiel,
- Fig. 3: Detailansichten der Rückdrehsicherung,
- Fig. 4: den Ablauf des Befestigens und Sicherns mittels der Montageschnittstelle,
- Fig. 5: den Ablauf des Öffnens des Bajonett-Verschlusses,
- Fig. 6: unterschiedliche Ausgestaltungsmöglichkeiten der Ausrücksicherung,
- Fig. 7: Detailansichten einer weiteren Ausgestaltungsmöglichkeit der Ausrücksicherung,
- Fig. 8: ein als normal geschlossenes Ventil ausgestaltetes erfindungsgemäßes Funktionsmodul,
- Fig. 9: ein als normal offenes Ventil ausgestaltetes erfindungsgemäßes Funktionsmodul,
- Fig. 10: ein als mediengetrenntes Ventil ausgestaltetes erfindungsgemäßes Funktionsmodul,
- Fig. 11: ein als 3/2-Wege-Ventil ausgestaltetes erfindungsgemäßes Funktionsmodul,
- Fig. 12: zwei Ausgestaltungsmöglichkeiten eines als Filter ausgestaltetes erfindungsgemäßes Funktionsmoduls, und
- Fig. 13: ein als Proportionalitätsventil ausgestaltetes erfindungsgemäßes Funktionsmodul.

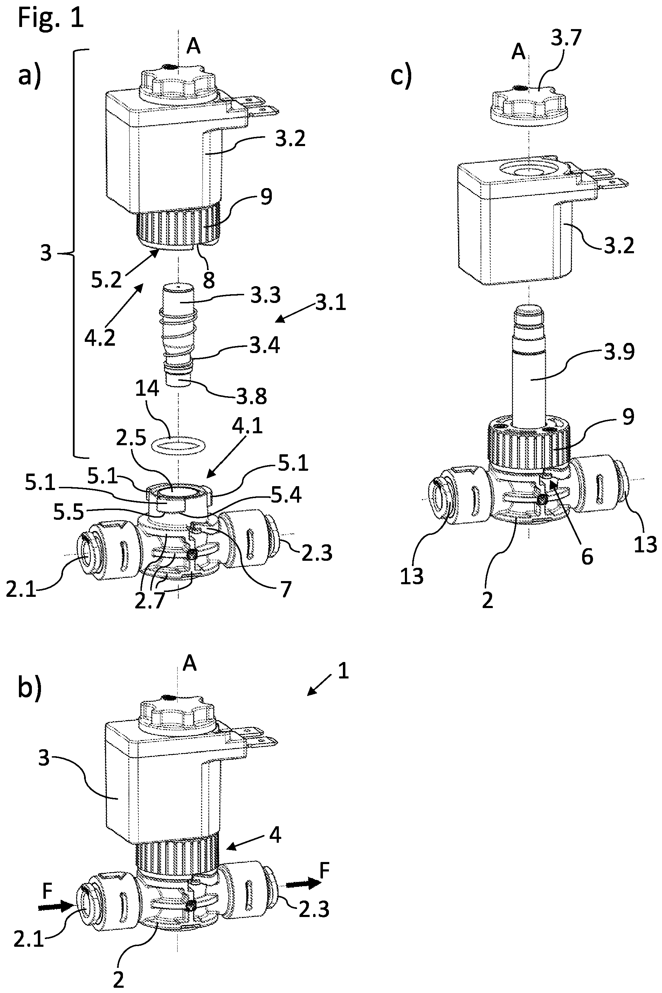

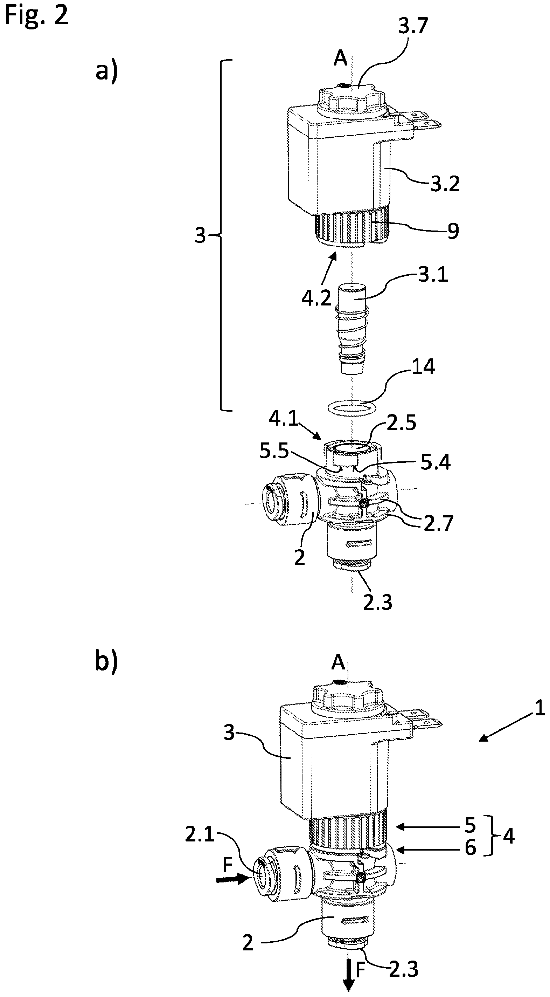

Die Fig. 1 und 2 zeigen jeweils ein Fluidmodul 1, welches in einem nicht dargestellten Fluidsystem verwendet werden kann. Dieses Fluidmodul 1 besteht im Wesentlichen aus einer Fluidführungseinheit 2 und einer Funktionseinheit 3, welche über eine Montageschnittstelle 4 an der Fluidführungseinheit 2 befestigt wird. Fig. 1a und Fig. 2a zeigen das jeweilige Funktionsmodul 1 in einer Explosionsdarstellung, welche dem nicht montierten Zustand des Fluidmoduls entspricht. Fig. 1b und Fig. 2b zeigen hingegen den montierten Zustand des Fluidmoduls 1, in welchem die Funktionseinheit 3 an der Fluidführungseinheit 2 befestigt ist.

Die aus einem Hartkunststoff gefertigte Führungseinheit 2 weist einen Einlauf 2.1, einen Auslauf 2.3 sowie einen in diesen Figuren nicht zu erkennenden Strömungskanal 2.2 auf, welcher den Einlauf 2.1 mit dem Auslauf 2.3 verbindet. Auf diese Weise kann ein Fluid des Fluidsystems entlang der Strömungsrichtung F über den Einlauf 2.1 in die Fluidführungseinheit 2 einströmen und die Fluidführungseinheit 2 durch den Strömungskanal 2.2 bis zum Auslauf 2.3 durchströmen. Über den Auslauf 2.3 kann das Fluid dann entlang der Strömungsrichtung F aus der Fluidführungseinheit 2 ausströmen.

Der wesentliche Unterschied zwischen der in Fig. 1 gezeigten Fluidführungseinheit 2 und der in Fig. 2 gezeigten Fluidführungseinheit 2 besteht in der relativen Anordnung des Einlaufs 2.1 und des Auslaufs 2.3.

So sind der Einlauf 2.1 und der Auslauf 2.3 im Ausführungsbeispiel der Fig. 1 im Wesentlichen fluchtend zueinander angeordnet, so dass die Strömungsrichtung F des einströmenden Fluids im Wesentlichen der Strömungsrichtung F des ausströmenden Fluids entspricht. Diese Ausgestaltung der Fluidführungseinheit 2 gestattet es, das Fluidmodul 1 in einem im Wesentlichen gradlinig verlaufenden Leitungsstücks des Fluidsystems einzubringen.

Im Ausführungsbeispiel der Fig. 2 ist der Auslauf 2.3 im Wesentlichen um 90° relativ zum Einlauf 2.1 abgewinkelt. Auf diese Weise wird das entlang der Strömungsrichtung F in den Einlauf 2.1 einströmende Fluid durch die Fluidführungseinheit 2 derart umgelenkt, dass es diese entlang einer Strömungsrichtung F aus dem Auslauf 2.3 verlässt, welche quer zur Strömungsrichtung F des einströmenden Fluids steht. Mit einer derart ausgestalteten Fluidführungseinheit 2 kann das Fluidmodul 1 an einer Stelle in das Fluidsystem eingebracht werden, welche ein Umlenken des Fluidstroms erfordert.

In Fig. 1 und Fig. 2 sind sowohl im Einlauf 2.1 als auch im Auslauf 2.3 Verbindungsmittel 13 zur Verbindung mit Leitungen des Fluidsystems angeordnet. Diese Verbindungsmittel 13 sind als selbstarretierende Leitungssteckaufnahmen ausgestaltet, in welche ein Leitungsstück des Fluidsystems eingesteckt und dadurch befestigt werden kann. Um das Leitungsstück von der Fluidführungseinheit 2 zu trennen, muss das Verbindungsmittel 13 manuell in das Fluidführungseinheit 2 hineingedrückt werden, so dass das Leitungsstück gleichzeitig abgezogen werden kann. Zusätzlich sind im Einlauf 2.1 und Auslauf 2.3 nicht dargestellte Dichtmittel zur Abdichtung des Übergangs von der Fluidführungseinheit 2 zu den Verbindungsmitteln 13 angeordnet.

Die Funktionseinheit 3 ist in den Ausgestaltungsbeispielen der Fig. 1 und Fig. 2 identisch ausgestaltet, so dass sie wahlweise mit einem der beiden Fluidführungseinheiten 2 dieser Ausführungsbeispiele verbunden werden kann. Zu diesem Zweck weisen die Fluidführungseinheiten 2 der Fig. 1 und Fig. 2 identische Schnittstellenteile 4.1 der zur Befestigung der Funktionseinheit 3 dienenden Montageschnittstelle 4 auf. Diese identischen Schnittstellenteile 4.1 gestatten die Bereitstellung eines ganzen Fluidmodul-Systems, bei welchem unterschiedliche Funktionseinheiten 3 zur Umsetzung unterschiedlicher Funktionen im Fluidsystem mit den jeweiligen Fluidführungseinheiten 2 wahlweise verbunden werden können.

Dieser an der Fluidführungseinheit 2 angeordnete Schnittstellenteil 4.1 der Montageschnittstelle 4 umfasst sowohl einen Teil eines Bajonett-Verschlusses 5 sowie einen Teil einer Rückdrehsicherung 6, welche jeweils zur Montageschnittstelle 4 gehören und zusammen mit den jeweiligen anderen Teilen des Bajonett-Verschlusses 5 und der Rückdrehsicherung 6, welche zum funktionseinheitsseitigen Schnittstellenteil 4.2 der Montageschnittstelle 4 gehören, eine Befestigung und Sicherung der Funktionseinheit 3 an der Fluidführungseinheit 2 ermöglichen.

In den dargestellten Ausführungsbeispielen weist das Schnittstellenteil 4.1 drei Verschluss-Nasen 5.1 als Teile des Bajonett-Verschlusses auf. Diese Verschluss-Nasen 5.1 ragen in radialer Richtung um die Aufnahmeachse A, entlang welcher die Funktionseinheit 3 auf die Fluidführungseinheit 2 aufgesteckt wird und diese somit aufnimmt, derart hervor, dass sie von mit ihnen korrespondierenden Verschluss-Aussparungen 5.2 des Bajonett-Verschlusses 5 derart aufgenommen werden können, dass die Funktionseinheit 3 entlang der Aufnahmeachse A an der Fluidführungseinheit 2 befestigt ist.

Die drei Verschluss-Nasen 5.1 sind dabei im Wesentlichen um 120° zueinander winkelversetzt angeordnet. Auf diese Weise kann eine gleichmäßige und stabile Befestigung der Funktionseinheit 3 an der Fluidführungseinheit 2 erzielt werden. Zudem wird auf diese Weise ermöglicht, dass nach dem Aufstecken das Schließen des Bajonett-Verschlusses 5 durch eine relative Drehung der Verschluss-Aussparungen 5.2 zu den Verschluss-Nasen 5.1 von 45°bis 60° um die Aufnahmeachse A zum Schließen des Bajonett-Verschlusses 5 ausreicht. Eine Drehung in diesem Winkelbereich gestattet zum einen ein schnelles Schließen des Bajonett-Verschlusses 5, erfordert zugleich aber eine derart weite Drehung, dass das Schließen des Bajonett-Verschlusses 5 bewusst und nicht versehentlich erfolgen muss.

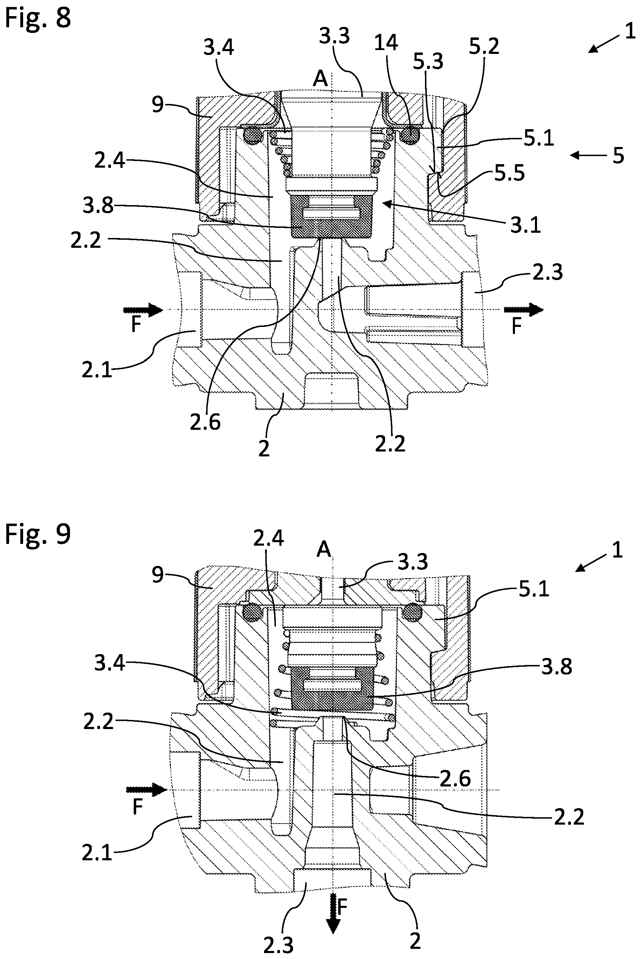

Die einzelnen Verschluss-Nasen 5.1 weisen zudem eine Anlaufschräge 5.4 auf der dem Einlauf 2.1 und dem Auslauf 2.3 zugewandten Seite auf. Diese Anlaufschräge 5.4 kann Teil der Verschlussfläche 5.5 der Verschluss-Nase 5.1 sein, mit welcher die Verschluss-Nase 5.1 zum Verschließen mit der ihr zugeordneten Verschluss-Aussparung 5.2, insbesondere deren Verschlussfläche 5.2, zusammenwirkt. Gegenüber dem restlichen Bereich der Verschlussfläche 5.5, welche sich im Wesentlichen quer zur Aufnahmeachse A erstreckt und allenfalls fertigungstechnisch bedingt und zur Vermeidung von Hinterschnitten in Richtung der Aufnahmeachse angeschrägt ist, vgl. Fig. 8, ist die Anlaufschräge 5.4 derart verkippt, dass sich die Verschluss-Nase 5.1 auf einer Seite leicht verjüngt. Bei dem während des Schließens des Bajonett-Verschlusses 5 erfolgenden relativen Verdrehen der Verschluss-Aussparung 5.2 zur Verschluss-Nase 5.1 gestattet die Anlaufschräge 5.4 eine teilweise Konvertierung der Drehbewegung in eine Heranziehbewegung der Funktionseinheit 3 an die Fluidführungseinheit 2. Dieses durch die Anlaufschräge 5.4 erzieltes Heranziehen kann zur Betätigung der untenstehend beschriebenen Rückdrehsicherung 6 genutzt werden, so dass diese während des Schließens des Bajonett-Verschlusses ohne zusätzliches manuelles Eingreifen betätigt werden kann. Ebenso wie der Bajonett-Verschluss 5 ist die Rückdrehsicherung 6 auf diese Weise werkzeuglos betätigbar.

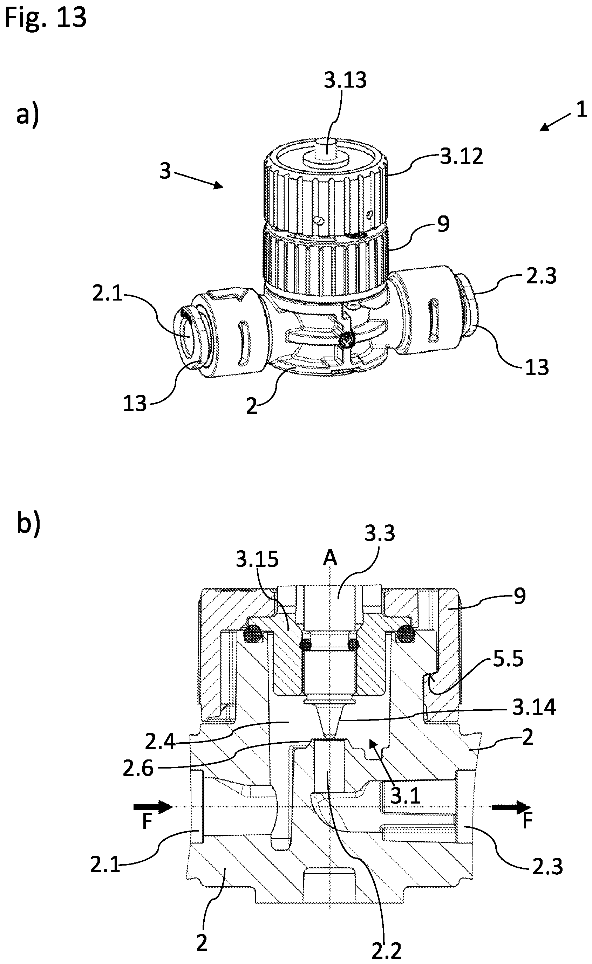

Die Verschluss-Nasen 5.1 umgeben eine Aufnahmeöffnung 2.5 der Fluidführungseinheit 2. Über diese Aufnahmeöffnung 2.5 kann die Fluidführungseinheit 2 die Funktionseinheit 3 teilweise in ihrem Inneren aufnehmen. Zu diesem Zweck schließt sich an die Aufnahmeöffnung 2.5 ein innerhalb der Fluidführungseinheit 2 liegender Aufnahmebereich 2.4 an, welche in Fig. 1 und Fig. 2 nicht zu erkennen ist, jedoch in den Fig. 8. bis Fig. 13 gezeigt wird. Dieser Aufnahmebereich 2.4 stellt einen Teil des Strömungskanals 2.2 dar, so dass die über die Montageschnittstelle 4 an der Fluidführungseinheit 2 befestigte und gesicherte Funktionseinheit 3 über die Montageschnittstelle 4 mit dem Aufnahmebereich 2.4 und somit mit dem Strömungskanal 2.2 strömungsverbunden ist.

Neben den Verschluss-Nasen 5.1 weist das Schnittstellenteil 4.1 der Fluidführungseinheit 2 eine als Schnapphaken 7 ausgestaltete Komponente der Rückdrehsicherung 6 auf. Entlang der Aufnahmeachse A ist dieser Schnapphaken 7 axial zu den Verschluss-Nasen 5.1 beabstandet angeordnet, so dass auch die Rückdrehsicherung 6 zum Bajonett-Verschluss 5 axial beabstandet ist. Auf die Rückweise des Schnapphakens 7 wird weiter untenstehend näher eingegangen.

An der Außenseite weist die Fluidführungseinheit 2 mehrere Verstärkungsrippen 2.7 auf. Diese Verstärkungsrippen 2.7 erhöhen die Druckbeständigkeit der Fluidführungseinheit 2, so dass sie druckfest ausgeführt ist und insbesondere Drücken von bis zu 16 bar im Strömungskanal 2.2 standhalten kann.

Neben der ein erstes Gehäuseteil des Fluidmoduls 1 darstellenden Fluidführungseinheit 2 stellt die Funktionseinheit 3 ein zweites Gehäuseteil des Fluidmoduls 1 dar. Wie in Fig. 1 und Fig. 2 zu erkennen ist, ist die Funktionseinheit 3 mehrteilig aufgebaut. Sie umfasst ein Funktionselement 3.1, welches in den dargestellten Ausführungsbeispielen als ein Schließelement mit einem Plunger 3.3 sowie einem an diesem angeordneten Schließmittel 3.8 ausgestaltet ist. Um den Plunger 3.3 ist zudem eine Spiralfeder 3.4 angeordnet. Mit diesem Funktionselement 3.1 kann die Funktionseinheit 3 den Strömungskanal 2.2 der Fluidführungseinheit 2 schließen oder öffnen, was der Umsetzung der Funktion dieser Funktionseinheit 3 im Fluidsystem entspricht. Die in den Fig. 1, 2 und 8 gezeigten Ausführungsbeispiele des Fluidmoduls 1 können somit als normal geschlossene Ventile innerhalb des Fluidsystems fungieren.

Um das Funktionselement 3.1 innerhalb des Aufnahmebereichs 2.4 bewegen zu können, weist die Funktionseinheit 3 zusätzlich eine eingehauste Magnetspule 3.2 auf. In ihrem bestromten Zustand kann diese Magnetspule 3.2 das Funktionselement 3.1 anziehen, da der Plunger 3.3 aus einem ferromagnetischen Material gefertigt ist. Im bestromten Zustand bewirkt die Magnetspule 3.2 somit das Öffnen des Ventils. Um das Ventil im nicht bestromten Zustand der Magnetspule 3.2 schließen zu können, ist die Feder 3.4 derart an dem Plunger 3.3 angeordnet, dass sie diesen in Richtung des Inneren der Fluidführungseinheit 2 vorspannt, so dass sie einen normal geschlossenen Zustand einnehmen kann.

Da die Funktionseinheit 3 mit dem Strömungskanal 2.2 strömungsverbunden ist, muss die Montageschnittstelle 4 abgedichtet werden, da ansonsten das Fluid aus der Ausnahmeöffnung 2.3 und die Montageschnittstelle 4 aus dem Fluidmodul 1 austreten könnte. Zu diesem Zweck wird ein Dichtring 14 in eine Nut des Schnittstellenteils 4.1 eingelegt, welche zwischen der Aufnahmeöffnung 2.5 und den Verschluss-Nasen 5.1 radial um die Aufnahmeachse A verlaufend angeordnet ist.

Damit die Funktionseinheit 3 an der Fluidführungseinheit 2 befestigt werden kann, weist diese an ihrer der Fluidführungseinheit 2 zugewandten Seite den zweiten Schnittstellenteil 4.2 der Montageschnittstelle 4 auf. Ausgebildet ist dieser Schnittstellenteil 4.2 als Teil einer als Überwurfmutter ausgestalteten Befestigungskappe 9. Diese Befestigungskappe 9 kann drehfest mit der Magnetspule 3.2 oder relativ zu dieser drehbeweglich ausgestaltet sein.

Insbesondere eine drehbewegliche Ausgestaltung der Befestigungskappe 9 relativ zur Magnetspule 3.2 gestattet es letztere, auch im befestigten und gesicherten Zustand der Funktionseinheit 3 um die Aufnahmeachse A zu drehen. Auf diese Weise kann die Magnetspule 3.2 auch im befestigten Zustand noch ausgerichtet werden, um beispielsweise eine bessere Zugänglichkeit zu ihren elektrischen Kontakten zu ermöglichen.

Wie in Fig. 1c gezeigt, kann die Magnetspule 3.2 auch bei geschlossenem Bajonett-Verschluss 5 getrennt werden, um diese beispielsweise auszutauschen. Hierzu wird die Funktionseinheit 3 durch Lösen der Hutmutter 3.7 demontiert. Durch das Lösen und das Entfernen der aus einem Kunststoff besehenden Hutmutter 3.7 ist die Magnetspule 3.2 nicht mehr an dem mit der Befestigungskappe 9 verbundenen Oberteil 3.9 befestigt, welches den mit dem Strömungskanal 2.2 strömungsverbundenen Bereich der Funktionseinheit 3 von der Magnetspule 3.2 und insbesondere deren Spulenwicklung trennt. Die Magnetspule 3.2 kann nun entlang der Aufnahmeachse A von dem Oberteil 3.9 abgezogen und getauscht werden, ohne dass der Bajonett-Verschluss 5 geöffnet werden muss. Da der außerhalb der Befestigungskappe 9 befindliche Teil des Oberteils 3.9 mit dem Strömungskanal 2.2 strömungsverbunden, jedoch nach außen abgedichtet ist, wird auf diese Weise ein Austausch der Magnetspule 3.2 ermöglicht, ohne dass Fluid funktionseinheitsseitig aus dem Fluidmodul 1 austritt.

Durch Fertigung der Hutmutter 3.7 aus einem Kunststoff können zudem metallische Teile der Funktionseinheit 3 im zusammengesetzten Zustand berührungsgeschützt sein. In einem Schadensfall der Magnetspule 3.2 kommt es so nicht zu einem elektrischen Schlag beim Berühren der Funktionseinheit 3. Außerdem verhindert die Hutmutter 3.7 ein mögliches Rosten der inneren galvanisch geschützten Bauteile der Funktionseinheit 3.

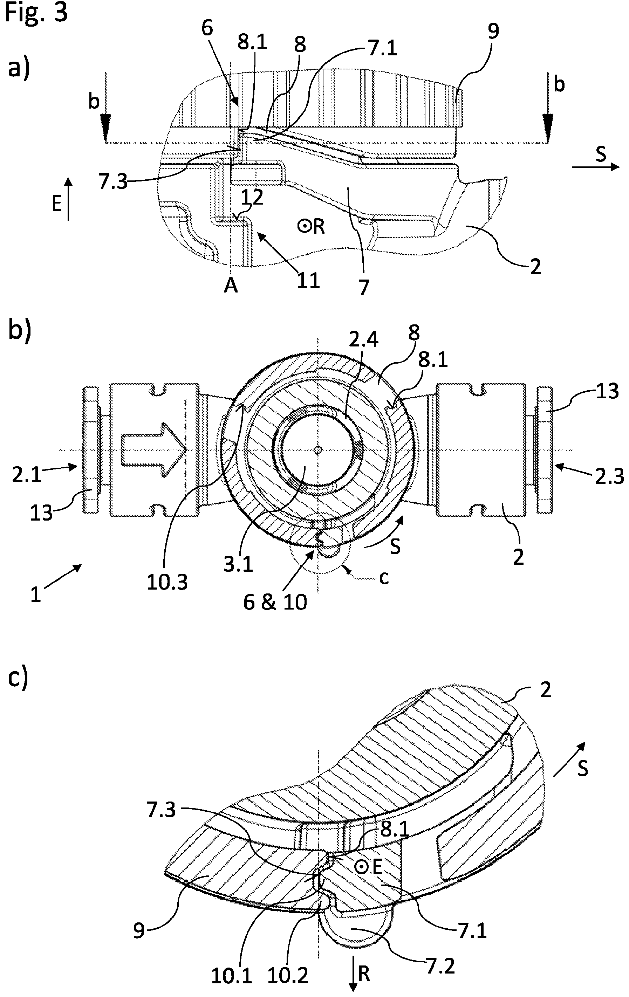

Anhand der Fig. 3 wird im Folgenden die Ausgestaltung der Rückdrehsicherung 6 näher beschrieben. Zu erkennen ist die im unteren Randbereich der Befestigungskappe 9 angeordnete Einschnappausnehmung 8, in welche der Schnapphaken 7 eingeschnappt ist. In dem dargestellten Ausführungsbeispiel ist die Einschnappausnehmung 8 als eine im Wesentlichen dreieckförmige und nach außen offene Auskerbung des unteren Rands der Befestigungskappe 9 ausgestaltet. Entlang einer Einschnapprichtung E schnappt der Schnapphaken 7 in diese Einschnappausnehmung 8 ein, um die Befestigungskappe 9 und somit die Montageschnittstelle 4 und den Bajonett-Verschluss 5 gegen ein Rückdrehen entlang der Sicherungsrichtung S zu sichern.

In der in Fig. 3a dargestellten Sicherungsposition liegt die Sicherungsfläche 8.1 der Einschnappausnehmung 8 zu diesem Zweck an der Sicherungsfläche 7.3 des Schnapphakens 7 an, welche insbesondere Teil des in die Einschnappausnehmung 8 hineinragenden Einschnappvorsprungs 7.1 ist. Die im Wesentlichen radial verlaufenden Sicherungsflächen 7.3, 8.1 verhindern in dieser Sicherungsposition der Rückdrehsicherung 6 ein unbeabsichtigtes Öffnen des Bajonett-Verschlusses 5. Denn beim Versuch, die Befestigungskappe 9 entlang der Sicherungsrichtung S zu drehen, überträgt die Sicherungsfläche 8.1 die für diese Drehung aufgewandte Kraft über die Sicherungsfläche 7.3 auf den Schnapphaken 7, welcher aufgrund des Verlaufs der Sicherungsfläche 7.3 nicht selbstständig aus der Einschnappausnehmung 8 ausrücken kann und daher eine Bewegung der Einschnappausnehmung 8 entlang der Sicherungsrichtung S blockiert.

Neben der in Fig. 3a gezeigten Einschnappausnehmung 8 weist die Montageschnittstelle 4 im dargestellten Ausführungsbeispiel noch zwei weitere identisch ausgestaltete Einschnappausnehmungen 8 auf, welche um einen Winkel von 120° um die Aufnahmeachse A zueinander winkelversetzt sind. Die mehreren Einschnappausnehmungen 8 ermöglichen die Befestigung und Sicherung der Funktionseinheit 3 in unterschiedlichen Winkelpositionen um die Aufnahmeachse an der Fluidführungseinheit 2.

Der Schnapphaken 7 ist nach Art eines Kragarms ausgestaltet. Einseitig ist dieser an der Fluidführungseinheit 2 angeordnet und im dargestellten Ausführungsbeispiel einstückig mit dieser ausgestaltet. An seinem der Befestigungsstelle diametral gegenüberliegenden Ende weist der Schnapphaken 7 einen über die Befestigungsstelle in Richtung der Funktionseinheit 3 hinausragenden Einschnappvorsprung 7 auf. Dieser sich im Wesentlichen parallel zur Aufnahmeachse A erstreckende Einschnappvorsprung 7.1 ragt bei geschlossenem Bajonett-Verschluss 5 in seiner Sicherungsposition in den unteren Rand der Befestigungskappe 9 und die dort angeordnete Einschnappausnehmung 8 hinein.

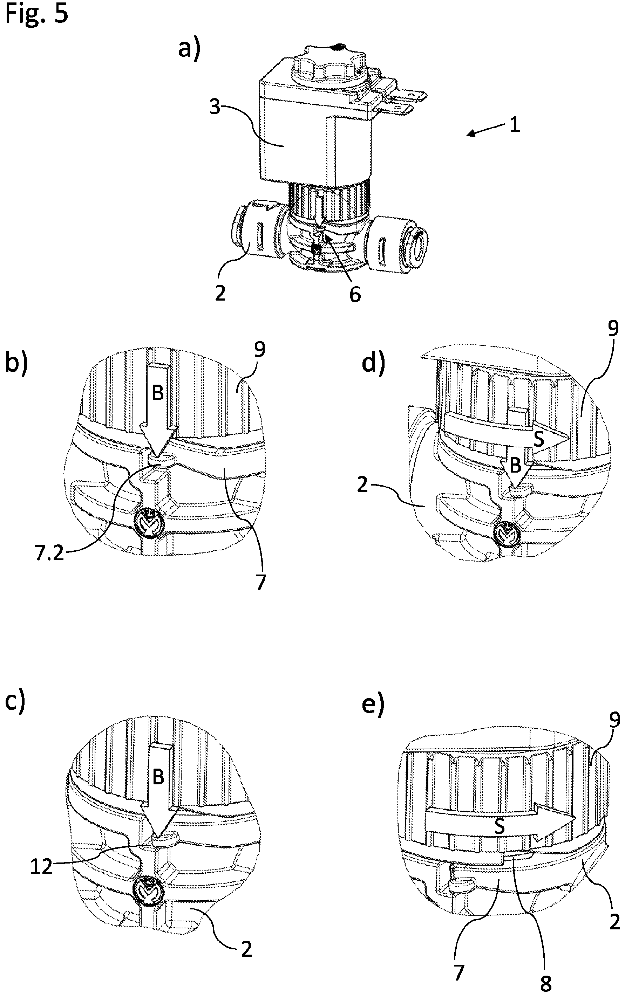

Neben dem Einschnappvorsprung 7.1 weist dieses Ende des Schnapphakens 7 einen Betätigungsvorsprung 7.2 auf. Dieser entlang der Aufnahmeachse A unterhalb des Einschnappvorsprung 7.1 angeordneter Betätigungsvorsprung 7.2 dient zur manuellen Lösung der Rückdrehsicherung 6. Dazu kann der Schnapphaken 7 über den Betätigungsvorsprung 7.2 manuell aus der Einschnappausnehmung 8 ausgerückt werden. Zu diesem Zweck wird eine parallel zur Aufnahmeachse A verlaufende Kraft auf den Betätigungsvorsprung 7.2 ausgeübt, wie dies untenstehend im Zusammenhang mit Fig. 5 näher beschrieben wird.

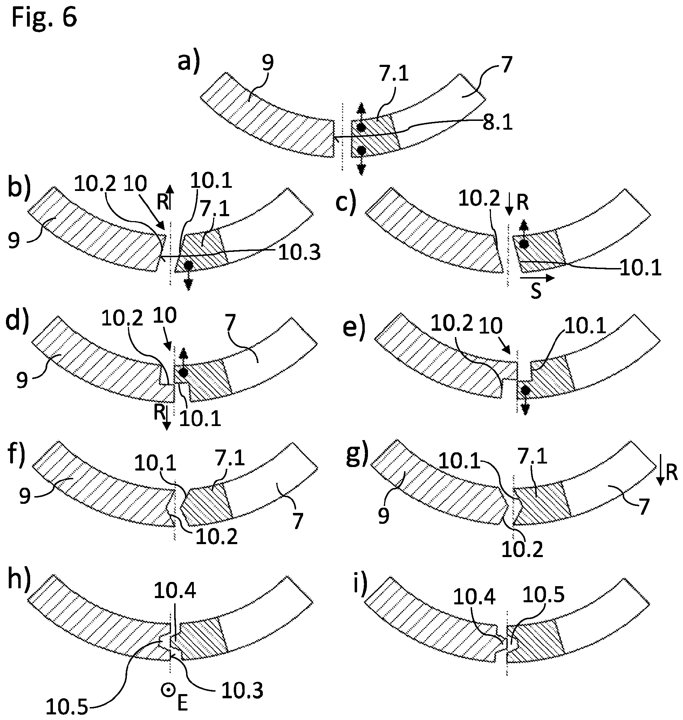

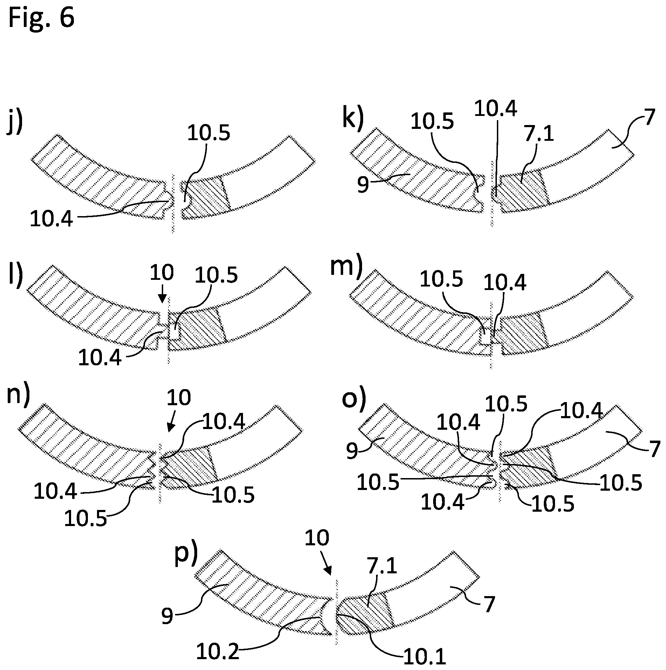

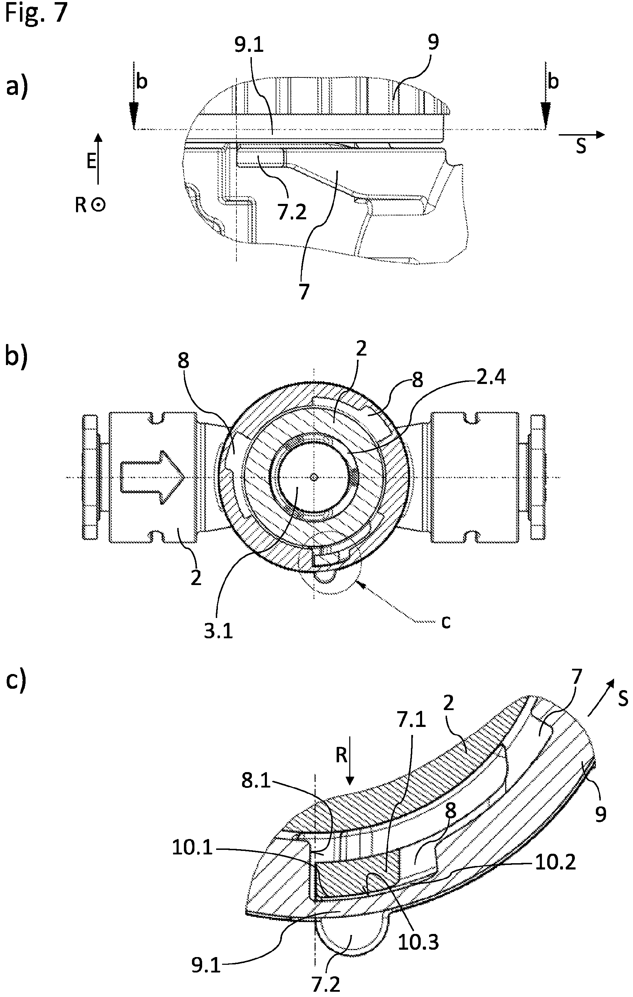

Bei dem in Fig. 3 dargestellten Ausführungsbeispiel des Schnapphakens 7 und der Einschnappausnehmung 8 weist der Einschnappvorsprung 7.1 und die diesem zugewandte Oberfläche 10.3 der Einschnappausnehmung 8 zusätzlich noch Rastkonturen 10.1, 10.2 auf, auf deren Funktion erst im Zusammenhang mit Fig. 6 und Fig. 7 eingegangen werden soll.

Neben dem in Fig. 3b zu erkennenden Aufnahmebereich 2.4 und dem darin aufgenommenen Funktionselement 3.1, welche radial außenliegend von der als Überwurfmutter ausgestalteten Befestigungskappe 9 umschlossen werden, ist in Fig. 3a auch ein Überbiegschutz 11 zu erkennen. Dieser dem Schnapphaken 7 zugeordnete Überbiegschutz 11 ist wie der Schnapphaken 7 ebenfalls einstückig mit der Fluidführungseinheit 2 ausgestaltet. Der Überbiegschutz soll ein Überbiegen des Schnapphakens 7 und somit eine Beschädigung oder dauerhafte plastische Verformung des Schnapphakens 7 verhindern. Zu diesem Zweck ist der Überbiegschutz 11 entgegen der Einschnapprichtung E unterhalb des Schnapphakens 7 angeordnet. Ausgestaltet ist der Überbiegschutz 11 als ein Anschlag 12, an welchem die dem Einschnappvorsprung 7.1 abgewandte Seite des freien Endes des Schnapphakens 7 bei einer Bewegung entgegen der Einschnapprichtung E anschlagen kann. Der Anschlag 12 ist dabei derart relativ zum Schnapphaken 7 positioniert, dass der Schnapphaken 7 bereits an diesem anschlägt, wenn er sich noch im durch sein Material bedingten elastischen Verformungsbereich befindet. Ein Biegen des Schnapphakens 7 von seiner Sicherungsstellung bis hin zum Anschlag 12 resultiert daher nicht in einem dauerhaften Verbiegen oder Beschädigen des Schnapphakens 7. Der bis zum Anschlag 12 gebogene Schnapphaken 7 kann daher noch selbstständig in seiner Sicherungsposition zurückfedern.

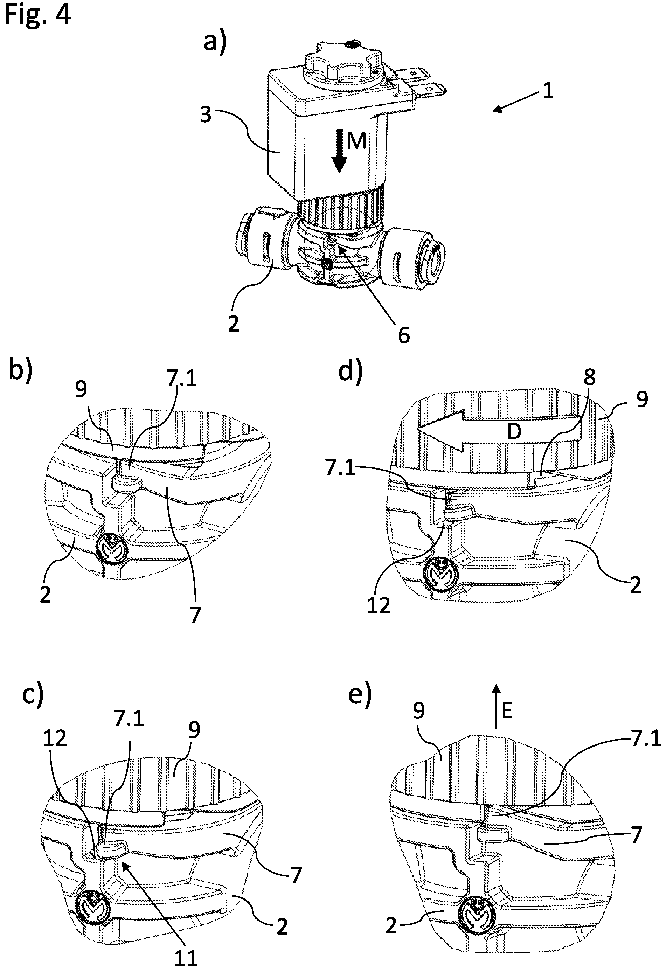

Anhand von Fig. 4 soll im Folgenden die Befestigung und Sicherung der Funktionseinheit 3 an der Fluidführungseinheit 2 beschrieben werden. Zunächst wird die Funktionseinheit 3 derart entlang der Aufnahmeachse A in Aufnahmerichtung M auf die Fluidführungseinheit 2 aufgesteckt, dass die Schnittstellenteile 4.1, 4.2 der Montageschnittstelle 4 miteinander in Kontakt gebracht werden. Zusammen mit der Funktionseinheit 3 wird deren Funktionselement 3.1 über die Aufnahmeöffnung 2.5 in den Aufnahmebereich 2.4 der Fluidführungseinheit 2 eingeführt. Die Funktionseinheit 3 wird auf diese Weise mit dem Strömungskanal 2.2 strömungsverbunden.

Wie in Fig. 4b gezeigt, kommt der untere Rand der Befestigungskappe 9 dabei in Kontakt mit dem Schnapphaken 7, dessen Einschnappvorsprung 7.1 der Funktionseinheit 3 und der Befestigungskappe 9 entgegenragt.

Damit die sich innerhalb der Befestigungskappe 9 befindlichen Verschluss-Aussparungen 6.2 über die Verschluss-Nase 5.1 zum Schließen des Bajonett-Verschlusses 5 gedreht werden können, muss die Befestigungskappe 9 zunächst weiter über die Fluidführungseinheit 2 gestülpt werden. Dies bewirkt ein Biegen des einseitig an der Fluidführungseinheit 2 angeordneten Schnapphakens 7 entgegen der Einschnapprichtung E, wie in Fig. 4c gezeigt. Begrenzt wird diese Bewegung durch den als Anschlag 12 ausgebildeten und bereits obenstehend beschriebenen Überbiegschutz 11.

Mit einer anschließenden Drehung der Befestigungskappe 9 entlang der Drehrichtung D werden die Verschluss-Aussparungen 5.2 bis zu ihrer Endposition derart über die Verschluss-Nasen 5.1 geschoben, dass diese an den Verschluss-Nasen 5.1 gesichert sind, der Bajonett-Verschluss 5 geschlossen ist und die Funktionseinheit 3 somit an der Fluidführungseinheit 2 befestigt ist, vgl. Fig. 4d.

Das in Fig. 4c gezeigte weitere Überstülpen kann durch eine in Aufnahmerichtung M erfolgende externe Krafteinwirkung auf die Funktionseinheit 3 erfolgen. Alternativ können die Verschluss-Nasen 5.1 durch ihre Anlaufschrägen 5.4 derart in Richtung der Verschluss-Aussparungen 5.2 verjüngt ausgestaltet sein, dass bereits ohne ein zusätzliches manuelles Herunterdrücken des Schnapphakens 7 ein Eingriff der Verschluss-Nasen 5.1 in die Verschluss-Aussparungen 5.2 erfolgen kann. Auf diese Weise können die Verschluss-Aussparungen 5.2 bei einem Drehen der Befestigungskappe 9 entlang der Drehrichtung D mit ihren Verschlussflächen 5.3 über die Anlaufschrägen 5.4 gleiten und dabei die Funktionseinheit 3 an die Fluidführungseinheit 2 heranziehen. Während dieser Drehbewegung wird der Schnapphaken 7 dann durch die sich an die Fluidführungseinheit 2 heranziehende Funktionseinheit 3, insbesondere durch den unteren Rand der Befestigungskappe 9, nach unten gebogen.

In beiden Fällen erreicht die Befestigungskappe 9 die in Fig. 4e gezeigte Position, in welcher der Bajonett-Verschluss 5 geschlossen ist. Da die Einschnappausnehmung 8 in dieser Position der Befestigungskappe 9 fluchtend zum Einschnappvorsprung 7.1 angeordnet ist, kann der durch das Umbiegen gespannte Schnapphaken 7 selbstständig in die Einschnappausnehmung 8 einschnappen. Auf diese Weise nimmt die Rückdrehsicherung 7 beim Schließen des Bajonett-Verschlusses 5 selbstständig ihre in Fig. 4e gezeigte Sicherungsposition ein.

Fig. 5 zeigt den Ablauf des Lösens der beschädigungslos lösbaren Rückdrehsicherung 6 sowie des Bajonett-Verschlusses 5. Zunächst wird auf den Betätigungsvorsprung 7.2, welcher relativ zu den weiteren Teilen des Schnapphakens entlang einer Radialrichtung hervorragt, eine Betätigungskraft entlang der Betätigungsrichtung B ausgeübt, vgl. Fig. 5a und Fig. 5b. Diese Betätigungskraft bewirkt ein derartiges Biegen des Schnapphakens 7 entlang der Betätigungsrichtung B, welche der Einschnapprichtung E entgegengesetzt verläuft, dass der Schnapphaken 7 und insbesondere dessen Einschnappvorsprung 7.1 aus der Einschnappausnehmung 8 ausrückt. Begrenzt wird diese Ausrückbewegung des Schnapphakens 7 durch den Anschlag 12, wie in Fig. 5c gezeigt.

Der derart manuell aus der Einschnappausnehmung 8 ausgerückte Schnapphaken 7 blockiert nun nicht mehr die Bewegung der Einschnappausnehmung 8, so dass die Befestigungskappe 9 entlang der Sicherungsrichtung S gedreht werden kann, vgl. Fig. 5d. Zu Beginn dieser Drehung muss die Krafteinwirkung auf den Betätigungsvorsprung 7.2 entlang der Betätigungsrichtung B aufrechterhalten werden, da der Schnapphaken 7 ansonsten selbsttätig wieder in die Einschnappausnehmung 8 einschnappt und eine Drehbewegung entlang der Sicherungsrichtung S verhindern würde.

Sobald die Befestigungskappe 9 entlang der Sicherungsrichtung S soweit gedreht ist, dass die Einschnappausnehmung 8 nicht mehr mit dem Einschnappvorsprung 7.1 des Schnapphakens 7 fluchtet, kann die Krafteinwirkung auf den Betätigungsvorsprung 7.2 entlang der Betätigungsrichtung B eingestellt werden, vgl. Fig. 5e. Der untere Rand der Betätigungskappe 9 hält den Schnapphaken 7 dann in seiner gebogenen Position. Die Betätigungskappe 9 wird dann solang weiter entlang der Sicherungsrichtung S gedreht, bis die Verschluss-Nasen 5.1 vollständig aus den Verschluss-Aussparungen 5.2 austreten. In dieser Drehstellung ist der Bajonett-Verschluss 5 gelöst, so dass die Funktionseinheit 3 entlang der Aufnahmeachse A von der Fluidführungseinheit 2 abgezogen werden kann. Auf diese Weise sind sowohl die Rückdrehsicherung 6 als auch der Bajonett-Verschluss 5 werkzeuglos lösbar.

Die Fig. 6a zeigt einen quer zur Aufnahmeachse A verlaufenden Schnitt durch eine Befestigungskappe 9 und einen Schnapphaken 7 im Bereich der Einschnappausnehmung 8. Zu erkennen ist die einfachste Ausgestaltung der Sicherungsflächen 7.3 und 8.1 des Einschnappvorsprungs 7.1 und der Einschnappausnehmung 8. Diese im Wesentlichen planen Sicherungsflächen 7.3, 8.1 verhindern bei einem in die Einschnappausnehmung 8 eingeschnappten Schnapphaken 7 effektiv ein Zurückdrehen entlang der Sicherungsrichtung S.

Dennoch kann es insbesondere bei der Aufwendung einer hohen Kraft entlang der Sicherungsrichtung S auf die Befestigungskappe 9 dazu kommen, dass der Schnapphake nach radialinnen oder radialaußen gebogen wird und so aus der Einschnappausnehmung 8 ausrückt, was anhand der beiden schwarzen Pfeile in Fig. 6a angedeutet ist. Ein derartiges radiales Ausrücken des Schnapphakens 7 stellt eine unzulässige Betätigung der Rückdrehsicherung 6 dar. Ein derartiges unzulässiges Ausrücken ist prinzipiell dennoch bei einer Überlast möglich und soll daher verhindert werden.

Zur Verhinderung eines solchen überlastbedingten unzulässigen Ausrückens ist die in Fig. 3 dargestellte Ausgestaltung der Rückdrehsicherung 6 mit einer zusätzlichen Ausrücksicherung 10 versehen, welche eine Bewegung des Schnapphakens 7 entlang einer von der Aufnahmeachse A wegweisenden Rastrichtung R blockiert. Neben der in Fig. 3 dargestellten Ausgestaltung dieser Ausrücksicherung 10 kann die Ausrücksicherung 10 auch durch andere geometrische Ausgestaltungen erzielt werden, von denen einige exemplarisch in Fig. 6b bis Fig. 6p gezeigt sind. Auf diese Ausgestaltungsmöglichkeiten einer solchen Ausrücksicherung 10 soll im Folgenden eingegangen werden.

Den gezeigten Ausrücksicherung 10 ist gemein, dass diese eine an dem Einschnappvorsprung 7.1 angeordnete Rastkontur 10.1 sowie eine an der dem Einschnappvorsprung 7.1 zugewandten Oberfläche 10.3 der Einschnappausnehmung 8 angeordnete Rastkontur 10.2 aufweisen. Diese Rastkonturen 10.1, 10.2 ermöglichen es, dem Einschnappvorsprung 7.1 und der Einschnappausnehmung 8 derart miteinander zu verrasten, dass die radiale Bewegungsfreiheit des Schnapphakens in seiner Sicherungsposition zumindest entlang einer Richtung blockiert.

Bei den in Fig. 6b und c dargestellten Ausführungsbeispielen erfolgt dies dadurch, dass die Rastkonturen 10.1, 10.2 relativ zu der Radialrichtung, welche durch die strichpunktierte Linie angedeutet ist, angeschrägt sind. Im Ausführungsbeispiel der Fig. 6b hintergreift der Einschnappvorsprung 7.1 mit seiner angeschrägten Rastkontur 10.1 die komplementär angeschrägte Rastkontur 10.2 der Einschnappausnehmung 8 radial außenliegend. Auf diese Weise kann sich der Einschnappvorsprung 7.1 weiterhin nach radialaußen bewegen, was durch den schwarzen Pfeil angedeutet wird. Durch das formschlüssige Verrasten entlang der nach radialinnen verlaufenden Rastrichtung R verhindert die Ausrücksicherung 10 im Ausführungsbeispiel der Fig. 6b jedoch ein unzulässiges Ausrücken nach radialinnen.

Analog hierzu verhindert die schrägverlaufende Rastkontur 10.1 in Fig. 6c durch ihr radial innenliegendes Hintergreifen der komplementär ausgestalteten Rastkontur 10.2 ein unzulässiges Ausrücken des Einschnappvorsprungs 7.1 entlang einer nach radialaußen gerichteten und von der Aufnahmeachse A wegweisenden Rastrichtung R. Eine Bewegung des Einschnappvorsprungs 7.1 nach radialinnen würde durch diese Ausgestaltung der Ausrücksicherung 10 hingegen nicht blockiert werden, was durch den schwarzen Pfeil angedeutet ist.

Ähnlich verhält es sich bei den Ausführungsbeispielen der Fig. 6d und Fig. 6e, bei welchen die Rastkonturen 10.1, 10.2 jeweils eine radial innenliegende bzw. radial außenliegende Ausklinkung aufweisen, so dass der jeweils nicht ausgeklinkte Teil der Rastkontur 10.1, 10.2 an dem ausgeklinkten Bereich der jeweils anderen Rastkontur 10.2, 10.1 anliegen kann. Die radial außenliegende Ausklinkung der Rastkontor 10.1 gemäß Fig. 6d blockiert dabei eine Bewegung des Einschnappvorsprung 7.1 entlang der von der Aufnahmeachse A wegweisenden Rastrichtung R. Die Rastkontur 10.1 des Schnapphakens 7 dieses Ausgestaltungsbeispiels hintergreift die Rastkontur 10.1 dabei strömungskanalseitig.

Die radial innenliegende Ausklinkung der Rastkontur 10.1 des Einschnappvorsprung 7.1 gemäß Fig. 6e blockiert hingegen eine Bewegung des Schnapphakens entlang einer nach radialinnen weisenden Rastrichtung R, d. h. die Rastkontur 10.1 hintergreift die Rastkontur 10.2 strömungskanalabgewandt. Gleichzeitig nach innen und außen angeschrägte Rastkonturen 10.1, 10.2 weisen die Ausführungsbeispiele der Fig. 6f und 6g auf. Auf diese Weise entsprechen die Rastkonturen 10.1, 10.2 in ihrer jeweiligen Form eine Spitze bzw. einer spitzförmigen Ausnehmung.

In Fig. 6f ist die Rastkontur 10.2 derart ausgestaltet, dass sie die Rastkontur 10.1 aufnehmen kann, d. h. sowohl radial innenliegend als auch radial außenliegend umgreifen kann.

In gleicher Weise ist die Rastkontur 10.1 im Ausführungsbeispiel der Fig. 6g derart ausgestaltet, dass sie die Rastkontur 10.2 der Einschnappausnehmung 8 aufnehmen kann.

Alternativ zu ihrer Ausgestaltung als Spitze bzw. als spitzförmige Ausnehmung können die Rastkonturen ansonsten im Wesentlichen gleichwirkend auch eine durchgehende Rundung aufweisen bzw. als abgerundete Ausnehmung ausgestaltet sein, wie dies beispielsweise im Ausführungsbeispiel der Fig. 6p gezeigt ist. Auch die Rastkontur 10.2 dieses Ausführungsbeispiels ist derart ausgestaltet, dass sie die Rastkontur 10.1 des Schnapphakens 7 aufnehmen kann.

Bei einem derartigen Aufnehmen der einen Rastkontur 10.1, 10.2 durch die andere Rastkontur 10.2, 10.1 kann ein unzulässiges Ausrücken des Schnapphakens 7 sowohl entlang als auch entgegen einer von der Aufnahmeachse A wegweisenden Rastrichtung R erzielt werden. Die radialen Bewegungsfreiheitsgrade des Schnapphakens 7 lassen sich auf diese Weise auf null reduzieren.

Die Rastkonturen 10.1, 10.2 der in den Fig. 6h bis Fig. 6o dargestellten Ausführungsbeispielen weisen zusätzlich Rastausnehmungen 10.5 bzw. Rastvorsprünge 10.4 auf. Die Rastvorsprünge 10.4 ragen dabei im Falle von an dem Schnapphaken 7 angeordneten Rastvorsprüngen 10.4 entgegen der Sicherungsrichtung S und im Falle von an der Einschnappausnehmung 8 angeordneten Rastvorsprüngen 10.4 entlang der Sicherungsrichtung S über die übrigen Bereiche der jeweiligen Rastkontur 10.1, 10.2 hervor. Die Rastausnehmung 10.5 stellt hingegen eine Ausnehmung gegenüber den restlichen Bereichen der jeweiligen Rastkontur 10.1, 10.2 dar, welche im Falle einer Rastausnehmung 10.5 der Einschnappausnehmung 8 entgegen der Sicherungsrichtung S in die Einschnappausnehmung 8 hineinragt und im Falle einer Rastausnehmung 10.5 des Schnapphakens 7 entlang der Sicherungsrichtung S in den Einschnappvorsprung 7.1 hineinragt.

Der Rastvorsprung 10.4 und die Rastausnehmung 10.5 sind dabei derart komplementär ausgestaltet, dass der Rastvorsprung 10.4 formschlüssig in die Rastausnehmung 10.5 eingreifen kann. Auf diese Weise wird durch die Ausrücksicherung 10 ein überlastbedingtes unzulässiges Ausrücken des Schnapphakens 7 entlang der Rastrichtung R sowohl von der Aufnahmeachse A weg als zur Aufnahmeachse A hin blockiert.

In den Ausführungsbeispielen der Fig. 6h und Fig. 6i ist der Rastvorsprung 10.4 nach Art eines parallel zur Einschnapprichtung E verlaufenden Stegs ausgestaltet, dessen Querschnitt quer zur Einschnapprichtung E einem gleichschenkligen Trapez entspricht, dessen kurze Seite in Richtung der Rastausnehmung 10.5 gewandt ist.

Bei den Ausführungsbeispielen der Fig. 6j und Fig. 6k sind die Rastvorsprünge 10.4 halbkugelförmig ausgestaltet, so dass sie von der ebenfalls halbkugelförmigen Rastausnehmung 10.5 aufgenommen werden können. Alternativ hierzu kann es sich bei den Rastvorsprüngen 10.4 der Fig. 6j und Fig. 6k auch um entlang der Einschnapprichtung E verlaufende Stege handeln, welche einen halbkreisförmigen Querschnitt aufweisen.

Die Rastvorsprünge 10.4 der in Fig. 6l und Fig. 6m gezeigten Ausführungsbeispiele können als entlang der Einschnapprichtung E verlaufende Stege ausgestaltet sein, welche einen im Wesentlichen quadratischen Querschnitt quer zur Einschnapprichtung E aufweisen. Die Rastausnehmungen 10.5 dieser Ausführungsbeispiele können komplementär zu diesen Rastvorsprüngen 10.4 ausgestaltete Nuten mit quadratischem Querschnitt sein.

Die Ausrücksicherungen 10 der in Fig. 6h bis Fig. 6m gezeigten Ausführungsbeispiele weisen jeweils nur einen Rastvorsprung 10.4 oder eine Rastausnehmung 10.5 je Schnapphaken 7 bzw. Einschnappausnehmung 8 auf. Die Ausrücksicherungen 10 können auf diese Weise konstruktiv einfach und formstabil hergestellt werden.

Alternativ kann es jedoch vorgesehen sein, dass jeder Schnapphaken 7 und/oder jede Einschnappausnehmung 8 mehrere Rastvorsprünge 10.4 und/oder Rastausnehmungen 10.5 aufweist. Durch die Verwendung von mehreren Rastvorsprüngen 10.4 und/oder Rastausnehmungen 10.5 je Schnapphaken 7 bzw. Einschnappausnehmung 8 kann die Kontaktfläche der Ausrücksicherung 10 vergrößert und so ein zuverlässiger Schutz gegen ein unzulässiges Ausrücken erzielt werden.

Bei den in Fig. 6n und Fig. 6o gezeigten Ausführungsbeispielen weisen sowohl der Schnapphaken 7 als auch die Einschnappausnehmung 8 jeweils abwechselnd angeordnete Rastvorsprünge 10.4 und Rastausnehmungen 10.5 auf. Durch diese alternierende Anordnung von Rastvorsprüngen 10.4 und Rastausnehmungen 10.5 können die Rastkonturen 10.1 und 10.2 verzahnend ineinandergreifen und so eine zuverlässige Sicherung gegen ein unzuverlässiges Ausrücken des Schnapphakens 7 entlang oder entgegen einer Rastrichtung R erzielen.

Bei dem in Fig. 6n gezeigten Ausführungsbeispiel weisen die Rastvorsprünge 10.4 einen spitzen, dreieckförmigen Querschnitt auf, während die Rastvorsprünge 10.4 des in Fig. 6o gezeigten Ausführungsbeispiels einen halbkreisförmigen Querschnitt aufweisen. Die Rastkonturen 10.1, 10.2 weisen aufgrund dieser Ausgestaltungen der alternierenden Rastvorsprünge 10.4 und Rastausnehmungen 10.5 im Falle der Fig. 6n eine sägezahnförmige Struktur und im Falle des Ausführungsbeispiels der Fig. 6o eine wellenförmige Struktur auf.

In Fig. 7 ist eine weitere Ausgestaltungsmöglichkeit der Ausrücksicherung 10 der Rückdrehsicherung 6 gezeigt. Anders als bei den bislang gezeigten Ausführungsbeispielen des Fluidmoduls 1 ist die Einschnappausnehmung 8 in diesem Ausführungsbeispiel nicht nach Art einer sich durch die gesamte Befestigungskappe 9 erstreckenden Aussparung ausgestaltet. Vielmehr ist die Einschnappausnehmung 8 nach befestigungskappenaußen verdeckt angeordnet, so dass der in die Einschnappausnehmung 8 eingeschnappte Einschnappvorsprung 7.1 des Schnapphakens 7 in der in Fig. 7 gezeigten Sicherungsposition von fluidmodulaußen nicht erkennbar ist. Vielmehr wird der Einschnappvorsprung 7.1 von einer Wandung 9.1 der Befestigungskappe 9 verdeckt.

Die Innenseite dieser Wandung 9.1, welche die Einschnappausnehmung 8 nach radialaußen hin begrenzt, stellt in diesem Ausführungsbeispiel einen Teil der Rastkontur 10.1 der Einschnappausnehmung 8 dar. Die Oberfläche 10.3 der Einschnappausnehmung 8 weist bei dieser Ausrücksicherung 10 somit zwei Teilflächen auf, welche die Einschnappausnehmung 8 zum einen in Umfangsrichtung entgegen der Sicherungsrichtung S und zum anderen nach radialaußen begrenzen. Die dem Einschnappvorsprung 7.1 zugewandte Oberfläche 10.3 der Einschnappausnehmung 8 weist auf diese Weise eine im Wesentlichen "L"-Form auf. Die die Einschnappausnehmung 8 entgegen der Sicherungsrichtung S begrenzende Teilfläche stellt dabei die Sicherungsfläche 8.1 der Rückdrehsicherung 6 dar. Die die Einschnappausnehmung 8 nach radialaußen begrenzende Fläche der Wandung 9.1 stellt hingegen die Rastkontur 10.2 dar, welche zusammenwirkend mit der durch die an ihr anliegende Seite des Einschnappvorsprungs 7.1 gebildeten Rastkontur 10.1 die Ausrücksicherung 10 bildet.

Auf diese Weise kann die zur Sicherung gegen ein Rückdrehen dienende Sicherungsfläche 8.1 baulich getrennt von der ein Ausrücken des Schnapphakens 7 verhindernden Rastkontur 10.2 ausgestaltet werden. Durch diese bauliche Trennung kann einer gegenseitigen Beeinträchtigung der Rückdrehsicherung 6 und der Ausrücksicherung 10 vorgebeugt werden.

In Fig. 8 ist ein durch die Aufnahmeachse A verlaufender Längsschnitt durch ein als normal geschlossenes Ventil ausgestaltetes Funktionsmodul 1 gezeigt. Zu erkennen ist der sich vom Einlauf 2.1 zum Auslauf 2.3 erstreckende Strömungskanal 2.2 der Fluidführungseinheit 2. Durch diesen kann das Fluid des Fluidsystems entlang der Strömungsrichtung F anströmseitig in den Einlauf 2.1 eintreten, das Fluidmodul 1 durchströmen, um abströmseitig entlang der Strömungsrichtung F aus dem Auslauf 2.3 auszutreten. Der Strömungskanal 2.2 weist dabei einen derart abgewinkelten Verlauf auf, dass das vom Einlauf 2.1 kommende Fluid zunächst in einen Aufnahmebereich 2.4 des Strömungskanals umgeleitet wird.

Wie bereits obenstehend beschrieben, dient dieser Aufnahmebereich 2.4 der Aufnahme der Funktionseinheit 3 entlang der Aufnahmeachse A. Dabei tritt ein Teil des Funktionselements 3.1 in diesen Aufnahmebereich 2.4 ein.

Im dargestellten Ausführungsbeispiel ist das Funktionselement 3.1 als ein Plunger 3.3 ausgestaltet, dessen der Fluidführungseinheit 2 zugewandtes Ende ein Schließmittel 3.8 aufweist. Mit diesem Schließmittel 3.8 kann das relativ zur Fluidführungseinheit 2 bewegliche Funktionselement 3.1 einen Ventilsitz 2.6 der Fluidführungseinheit 2 verschließen.

Dieser Ventilsitz 2.6 unterteilt den Strömungskanal 2.2 im Wesentlichen in zwei Teile. Diese sind ein anströmseitiger Teil, welcher sich vom Einlauf 2.1 zum Ventilsitz 2.6 erstreckt, und ein abströmseitiger Teil, welcher sich vom Ventilsitz 2.6 bis zum Auslauf 2.3 erstreckt. Im Ausführungsbeispiel der Fig. 8 kann das Fluid den Ventilsitz 2.6 von radialaußen anströmen und im geöffneten Zustand, in welchem das Schließmittel 3.8 den Ventilsitz 2.6 nicht verschließt, entlang der Aufnahmeachse A radial innenliegend durch den Ventilsitz 2.6 in Richtung des Auslaufs 2.3 strömen.

Der Ventilsitz 2.6 ist dabei einstückig mit der Fluidführungseinheit 2 ausgestaltet. Er ragt derart in den Aufnahmebereich 2.4 ein, dass er innerhalb des Strömungskanals 2.2 angeordnet ist.

Da die Fluidführungseinheit 2 zur Einbringung in einen im Wesentlichen gerades Leitungsstück des Fluidsystems gedacht ist und der Einlauf 2.1 daher im Wesentlichen fluchtend zum Auslauf 2.3 angeordnet ist, erfolgt in diesem abströmseitigen Teil des Strömungskanals 2.2 ein weiteres Umlenken des Fluids, so dass die Strömungsrichtung F am Auslauf 2.3 im Wesentlichen der Strömungsrichtung F am Einlauf 2.1 entspricht.

Die Bewegung des Funktionselements 3.1 erfolgt in der Fig. 8 mittels der nicht dargestellten Magnetspule 3.2, welche den Plunger 3.3 und somit auch das Schließmittel 3.8 in ihrem bestromten Zustand vom Ventilsitz 2.6 wegbewegt. Damit der Ventilsitz 2.6 im Normalzustand geschlossen ist, in welchem die Magnetspule 3.2 nicht bestromt ist, wird das als Schließelement ausgestaltete Funktionselement 3.1 durch die dieses umgebende Feder 3.4 entlang der Aufnahmeachse A in Richtung des Ventilsitzes 2.6 vorgespannt. Wird das Funktionselement 3.1 nunmehr vom Ventilsitz 2.6 wegbewegt, so wird die Feder 3.4 zusätzlich gespannt. Entfällt die zum Wegbewegen des Funktionselements 3.1 aufgewandte Kraft, beispielsweise durch ein Stromlosschalten der Magnetspule 3.2, so entspannt sich die Feder 3.4 teilweise und bewegt dabei das Funktionselement 3.1 wieder in Richtung des Ventilsitzes 2.6, welcher durch das Schließmittel 3.8 geschlossen wird.

Im rechten oberen Bereich der Fig. 8 ist zudem das Zusammenwirken der Verschluss-Nase 5.1 und der Verschluss-Aussparung 5.2 zu erkennen. In diesem verschlossenen Zustand des Bajonett-Verschlusses 5 hintergreift die Verschluss-Nase 5.1 die Verschluss-Aussparung 5.2 derart, dass ihre korrespondierenden Verschlussflächen 5.3, 5.5 wie gezeigt aneinander anliegen. Durch das wechselseitige Zusammenwirken sämtlicher Verschluss-Nasen 5.1 des Bajonett-Verschlusses 5 mit den ihnen zugeordneten Verschluss-Aussparungen 5.2 wird ein Wegbewegen der Funktionseinheit 3 entlang der Aufnahmeachse A von der Fluidführungseinheit 2 weg verhindert.

Ferner ist in Fig. 8 zu erkennen, dass die Verschlussfläche 5.5 der Verschluss-Nase 5.1 eine leichte Anschrägung nach radialaußen aufweist, so dass sich diese nicht ganz quer zur Aufnahmeachse A erstreckt. Durch diese nach radialaußen verlaufende Anschrägung werden radial verlaufende Hinterschnitte des Schnittstellenteils 4.1 der Fluidführungseinheit 2 vermieden. Ein Entformen der Fluidführungseinheit 2 wird auf diese Weise erleichtert, so dass die Fluidführungseinheit 2 in einem Spitzgussverfahren aus einem Kunststoff hergestellt werden kann.

Auch Fig. 9 zeigt ein als Ventil ausgestaltetes Fluidmodul 1 mit einem als Schließelement ausgestalteten Funktionselement 3.1. Bei diesem Ventil handelt es sich jedoch um ein normal offenes Ventil, bei welchem der Ventilsitz 2.6 solange geöffnet bleibt, bis er mit dem Schließmittel 3.8 aufgrund einer aktiven Bewegung des Plungers 3.3 verschlossen wird.

Auch dieses Funktionselement 3.1 kann mittels einer Magnetspule 3.2 der Funktionseinheit 3 betätigt werden. Der wesentliche funktionstechnische Unterschied liegt in der Anordnung der Feder 3.4. Wie in Fig. 8 ist auch diese Feder 3.4 innerhalb des Aufnahmebereichs 2.4 angeordnet. Wenngleich sie ebenfalls auf das Funktionselement 3.1 einwirkt, stützt sie sich jedoch im Unterschied zur Fig. 8 nicht an der Funktionseinheit 3, sondern vielmehr an der Unterseite des Aufnahmebereichs 2.4 der Fluidführungseinheit 2 ab. Auf diese Weise wird das Funktionselement 3.1 von der Feder 3.4 in Richtung der übrigen Funktionseinheit 3 vorgespannt, so dass es im nicht betätigten Zustand den Ventilsitz 2.6 nicht verschließt.

Die in Fig. 8 und Fig. 9 gezeigte Anordnung der Feder 3.4 innerhalb des Aufnahmebereichs 2.4 kann zudem einen das Lösen der Funktionseinheit 3 von der Fluidführungseinheit 2 erleichternden Beitrag leisten. Denn da die Feder 3.4 selbst im nicht betätigten Zustand des Fluidmoduls 1 teilweise gespannt ist und somit eine Kraft auf den Plunger 3.3 und im Falle des normal geschlossenen Ventils zusätzlich auch unmittelbar auf die Funktionseinheit 3 ausübt, kann sie sich nach dem Lösen des Bajonett-Verschlusses 5 entspannen und dabei die Funktionseinheit 3 von der Fluidführungseinheit 2 oder dem Funktionselement 3.1 und der Fluidführungseinheit 2 wegdrücken. Die Feder 3.4 bewirkt somit nach dem Lösen des Bajonett-Verschlusses 5 eine erste Beabstandung der Funktionseinheit 3 von der Fluidführungseinheit 2, wodurch die Demontage des Fluidmoduls 1 erleichtert wird.

Ein weiterer Unterschied des in Fig. 9 dargestellten Fluidmoduls 1 gegenüber dem in Fig. 8 dargestellten Fluidmodul 1 stellt die Ausgestaltung der Fluidführungseinheit 2 als ein Eckelement auf, bei welchem die Strömungsrichtung F des in den anströmseitigen Einlauf 2.1 einströmenden Fluids quer zur Strömungsrichtung F des aus dem abströmseitigen Auslauf 2.3 ausströmenden Fluids verläuft. Erreicht wird dies durch den im Wesentlichen gradlinig verlaufenden und keine Umlenkung aufweisenden abströmseitigen Teil des Strömungskanals 2.2.

Hinsichtlich des zur Umsetzung der Funktion der Funktionseinheit 3 relevanten Aufbaus des Aufnahmebereichs 2.4 und der relativen Anordnung des Ventilsitzes 2.6 zu diesem unterscheiden sich die Ausgestaltungsbeispiele der Fluidführungseinheiten 2 der Fig. 8 und der Fig. 9 jedoch nicht. Gleiches gilt auch für den Aufbau der Montageschnittstelle 4 und insbesondere des Bajonett-Verschlusses 5 und der Rückdrehsicherung 6 der beiden in den Fig. 8 und Fig. 9 gezeigten Ausführungsbeispiele. Auf diese Weise wird eine Kompatibilität der einzelnen Funktionseinheiten 3 und der Fluidführungseinheiten 2 erzielt. Die unterschiedlichen Funktionseinheiten 3 können somit wahlweise mit der in Fig. 8 oder der in Fig. 9 gezeigten Ausgestaltung der Fluidführungseinheit 2 zu einem Fluidmodul 1 verbunden werden, ohne dass dies ein Einfluss auf die Umsetzbarkeit der jeweiligen Funktion der Funktionseinheit 3 im Fluidsystem hat. Durch diese wahlweise Kombinierbarkeit unterschiedlicher Funktionseinheiten 3 mit diversen Fluidführungseinheiten 2 kann ein ganzes Fluidmodul-System bereitgestellt werden, mit welchem das für die jeweilige zu erzielende Funktion an dem jeweiligen Ort im Fluidsystem geeignete Fluidmodul 1 zusammengebaut werden kann.

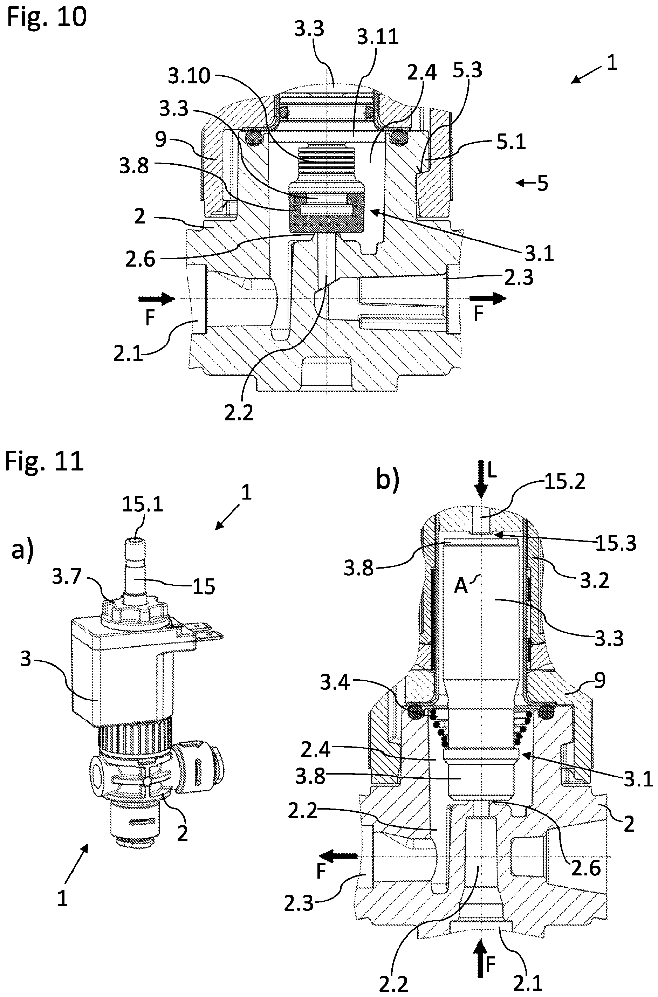

In Fig. 10 ist ein weiteres Ausgestaltungsbeispiel eines Fluidmoduls 1 gezeigt, welches als mediengetrenntes Ventil ausgestaltet ist. Der grundsätzliche Aufbau der Fluidführungseinheit 2, der Montageschnittstelle 4 und der Funktionseinheit 3 entspricht weitgehend dem bereits im Zusammenhang mit Fig. 8 beschriebenen Aufbau.

Jedoch weist das Ausgestaltungsbeispiel der Fig. 10 ein Funktionselement 3.1 auf, dessen Plunger 3.3 gegenüber dem Aufnahmebereich 2.4 gekapselt ist.

Dabei ist das dem Ventilsitz 2.6 zugewandte Ende des Plungers 3.3 weiterhin mit einem Schließmittel 3.8 versehen, welches dieses Ende des Plungers 3.3 gegenüber einem sich im Aufnahmebereich 2.4 befindliches Fluid schützt. In Richtung der restlichen Funktionseinheit 3 schließt sich an dieses Schließmittel 3.8 ein Faltenbalg 3.10 an, der das Schließmittel 3.8 mit einem Trennelement 3.11 verbindet. Während das Trennelement 3.11 den Aufnahmebereich 2.4 von den weiteren Teilen der Funktionseinheit 3 trennt, umschließt der Faltenbalg 3.10 den über das Trennelement 3.11 hinaus in den Aufnahmebereich 2.4 hineinragenden Teil des Plungers 3.3 radial außenliegend.

Ein direkter Kontakt des Plungers 3.3 und der entlang der Aufnahmeachse A auf der Ventilsitz abgewandten Seite des Trennelements 3.11 liegenden Teile der Funktionseinheit 3 mit dem in das Fluidmodul 1 einströmenden Fluid wird auf diese Weise verhindert. Insbesondere in einem korrosive oder andere reaktive Fluide enthaltenen Fluidsystem kann auf diese Weise eine Korrosion oder Beschädigung der einzelnen Teile der Funktionseinheit 3 sowie eine chemische Veränderung des Fluids verhindert werden.

Der Faltenbalg 3.10 ermöglicht es dennoch, weiterhin das Funktionselement 3.1 entlang der Aufnahmeachse A zum Öffnen und Schließen des Ventilsitzes 2.6 zu bewegen. Dabei kann insbesondere ein federnder Faltenbalg 3.10 verwendet werden, welcher die in Fig. 8 gezeigte Feder 3.4 ersetzt und das Schließmittel 3.8 in Richtung des Ventilsitzes 2.6 vorspannt.

In Fig. 11 ist eine weitere Ausgestaltungsmöglichkeit des Fluidmoduls 1 gezeigt, mit deren Funktionseinheit 3 die Funktion eines 3/2-Wege-Ventils umgesetzt werden kann. Zunächst entspricht der Aufbau der in Fig. 11 gezeigten Funktionseinheit 3 in weiten Teilen dem in Fig. 8 gezeigten normal geschlossenen Ventil. Jedoch weist die modifizierte Hutmutter 3.7 eine entlang der Aufnahmeachse A verlaufende Öffnung auf, durch welche ein Lüftungsmittel 15 entlang der Aufnahmeachse A herausragt. Dieses schnorchelartige Lüftungsmittel 15 weist an seinem von der Funktionseinheit 3 wegweisenden Ende eine Lüftungsöffnung 15.1 auf. An diese Lüftungsöffnung 15.1 schließt sich ein durch das gesamte Lüftungsmittel 15 hindurch erstreckender Lüftungskanal 15.2 an. Innenseitig der Funktionseinheit 3 mündet dieser Lüftungskanal 15.2 in einen Ventilsitz 15.3 des Lüftungsmittels 15.

Von dem Inneren der Funktionseinheit 3 aus erstreckt sich ein Funktionselement 3.1 bis in den Aufnahmebereich 2.4 der Fluidführungseinheit 2. Dieses Funktionselement 3.1 ist als ein entlang der Aufnahmeachse A beweglicher Plunger 3.3 ausgestaltet. Im Unterschied zum Plunger der Fig. 8 weist dieser Plunger 3.3 jedoch an seinen beiden entlang der Aufnahmeachse A diametral gegenüberliegenden Enden jeweils ein Schließmittel 3. 8 auf. Während das sich im Aufnahmebereich 2.4 befindliche Schließmittel 3.8 zum Verschließen des Ventilsitzes 2.6 dient, kann der Ventilsitz 15.3 des Lüftungsmittel 15 mit dem anderen Schließmittel 3.8 verschlossen werden.

In seiner Länge entlang der Aufnahmeachse A ist das Funktionselement 3.1 derart dimensioniert, dass es bei einer an der Fluidführungseinheit 2 befestigten und gesicherten Funktionseinheit 3 nur entweder den Ventilsitz 2.6 oder den Ventilsitz 15.3 verschließen kann. Auf diese Weise ist einer der Ventilsitze 2.6, 15.3 stets geöffnet.

Zudem ist der in der Funktionseinheit 3 befindliche Teil des Funktionselements 3.1 in radialer Richtung derart dimensioniert, dass das Funktionselement 3.1 nicht an der Innenseite der Funktionseinheit 3 anliegt, sondern ein den Aufnahmebereich 2.4 mit dem Ventilsitz 15.3 verbindender Spalt verbleibt.

Mit diesem Fluidmodul 1 wird somit die Funktion eines 3/2-Wege-Ventils umgesetzt. Fig. 11b zeigt dabei die Normalposition des Ventils, in welchem der Plunger 3.3 nicht aus einer Ruhelage aktiv bewegt wurde und die Magnetspule 3.2 stromlos ist. In dieser Normalposition verschließt das Funktionselement 3.1 den Ventilsitz 2.6, der Ventilsitz 15.3 ist jedoch unverschlossen. Der Auslauf 2.3 der Fluidführungseinheit 2 ist daher über den Aufnahmebereich 2.4 an dem Funktionselement 3.1 vorbei über den Ventilsitz 15.3 mit dem Lüftungskanal 15.2 und somit über die Lüftungsöffnung 15.1 mit der Umgebung des Fluidmoduls 1 verbunden. Auf diese Weise kann die das Fluidmodul 1 umgebende Luft oder ein anderes an das Lüftungsmittel 15 angeschlossene Medium, beispielsweise ein Schutzgas, von fluidmodulaußen entlang der Lüftungsrichtung L in das Fluidmodul 1 einströmen und dieses bis hin zum Auslauf 2.3 durchströmen. Der abströmseitige Teil des Strömungskanals 2.2 sowie der sich abströmseitig an das Fluidmodul 1 anschließende Teil des Fluidsystems kann so belüftet werden. Alternativ kann in dieser Normalposition auch ein Entlüften des abströmseitigen Strömungskanals 2.2 und abströmseitigen Teils des Fluidsystems erfolgen, bei welchem sich etwaig im Fluidsystem enthaltene Luft oder andere Gase in dem Aufnahmebereich 2.4 ansammeln und über das Lüftungsmittel 15 entgegen der Lüftungsrichtung L nach fluidmodulaußen abgeleitet werden können.

Wird die Funktionseinheit 3 betätigt, so bewegt sich das Funktionselement 3.1 vom Ventilsitz 2.6 weg, welcher freigegeben wird, während der Ventilsitz 15.3 zeitgleich verschlossen wird. Das im Fluidsystem enthaltene Fluid kann in dieser betätigten Position vom Einlauf 2.1 durch den Strömungskanal 2.2 hindurch zum Auslauf 2.3 strömen, ohne über den verschlossenen Ventilsitz 15.3 in den Lüftungskanal 15.2 eintreten und über die Lüftungsöffnung 15.1 austreten zu können. Diese Bewegung des Funktionselements 3.1 bewirkt zudem ein Spannen der Feder 3.4, welche beim Beenden der Betätigung des Funktionselements 3.1, insbesondere beim Stromlosschalten der Magnetspule 3.2, das Funktionselement 3.1 wieder in seine Normalposition überführt und so den Ventilsitz 2.6 verschließt und den Ventilsitz 15.3 öffnet.

In Fig. 11b lässt sich zudem erkennen, dass der Ventilsitz 2.6 zur Erfüllung dieser obenstehend beschriebenen Funktion von dem über den Einlauf 2.1 einströmenden Fluid von radial innenliegend angeströmt wird. Bei geöffnetem Ventilsitz 2.6 kann das Fluid diesen dann durchtreten und radial außenliegend abströmen. Im Vergleich zu der in Fig. 9 gezeigten Fluidführungseinheit 2 sind somit die Positionen des Einlaufs 2.1 und des Auslaufs 2.3 gegeneinander getauscht. In konstruktiver Hinsicht unterscheiden sich die in Fig. 9 und Fig. 11 dargestellten Fluidführungseinheiten 2 jedoch nicht voneinander. Es kann sich um ein und dieselbe Fluidführungseinheit 2 handeln, welche lediglich mit unterschiedlichen Funktionseinheiten 3 zu unterschiedlichen Fluidmodulen 1 verbunden und in umgekehrter Richtung in das Fluidsystem eingebunden wurde.

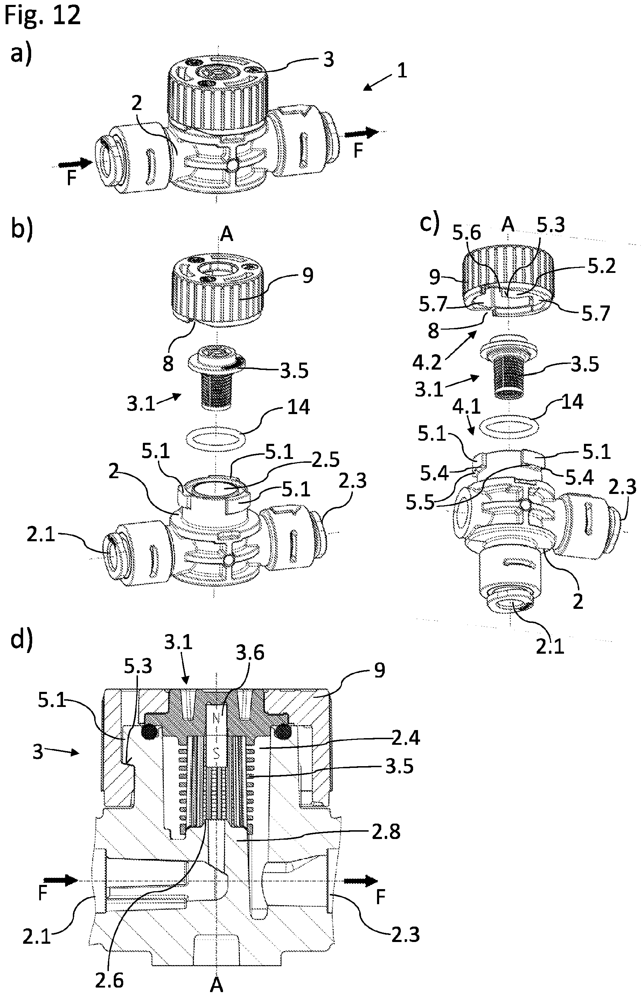

In Fig. 12 sind als Filtermodule ausgestaltete Fluidmodule 1 gezeigt. Die jeweiligen Funktionseinheiten 3 umfassen neben der Befestigungskappe 9 ein als Filter ausgestaltetes Funktionselement 3.1, welches mittels der Befestigungskappe 9 an den jeweiligen Fluidführungseinheiten 2 befestigt und gesichert werden kann.

Wie bei allen anderen Funktionseinheiten 3 des beschriebenen Fluidmodul-Systems kann auch diese Funktionseinheit 3 wahlweise an einer als gerades Leitungselement oder als eckiges Element ausgestalteten Fluidführungseinheit 2 befestigt und gesichert werden, wie in Fig. 12b und Fig. 12c gezeigt.

Die Perspektive der Fig. 12c gestattet zudem einen Blick in das Innere der Befestigungskappe. Zu erkennen ist dabei eine der befestigungskappeninnenseitig angeordneten Verschluss-Aussparungen 5.2 mit ihrer sich im Wesentlichen quer zur Aufnahmeachse A erstreckenden Verschlussfläche 5.3 sowie den Anschlag 5.6, an welchem die Verschluss-Nase 5.1 in der geschlossenen Stellung des Bajonett-Verschlusses 5 anschlägt. Links und rechts der Verschluss-Aussparung 5.2 lässt sich jeweils ein parallel zur Aufnahmeachse A verlaufender Aufnahmekanal 5.7 erkennen. Beim Aufstecken des Schnittstellenteils 4.2 auf den Schnittstellenteil 4.1 tritt jeweils eine der Verschluss-Nasen 5.1 in diese Aufnahmekanäle 5.7 ein. Geführt durch die Verschluss-Nase 5.1 kann die Befestigungskappe 9 entlang der Aufnahmekanäle 5.7 solange über das fluidführungseinheitsseitige Schnittstellenteil 4.1 der Montageschnittstelle 4 geschoben werden, bis eine zur Aufnahme der Verschluss-Nase 5.1 durch die Verschluss-Aussparung 5.2 herbeiführende Drehung der Befestigungskappe 9 um die Aufnahmeachse A zum Schließen des Bajonett-Verschlusses 5 möglich ist.

In Fig. 12d ist ein Längsschnitt entlang der Aufnahmeachse A durch das Funktionsmodul 1 gezeigt. Zu erkennen ist dabei die zwischen der Befestigungskappe 9 und der Fluidführungseinheit 2 zur Befestigung erfolgender Verklemmung des Funktionselements 3.1. Dieses Funktionselement 3.1 weist einen hohlzylinderartigen Filter 3.5 auf. Mit seinem in den Aufnahmebereich 3.4 hineinragenden Ende ist dieser Filter 3.5 entlang der Aufnahmeachse A über einen zylinderartigen Vorsprung 2.8 der Fluidführungseinheit 2 gestülpt, welcher den Ventilsitz 2.6 trägt. Auf diese Weise ist der Filter 3.5 an seinen beiden entlang der Aufnahmeachse A diametral gegenüberliegenden Enden gegen ein Verrutschen im Fluidmodul 1 gesichert.

Das über den Einlauf 2.1 einströmende Fluid kann durch den Ventilsitz 2.6 in das Innere des Filters 3.5 eintreten und derart radial durch diesen hindurchströmen, dass etwaige enthaltene Partikel aus dem Fluid herausgefiltert werden. Das gefilterte Fluid kann anschließend weiter entlang des Strömungskanals 2.2 zum Auslauf 2.3 strömen und über diesen aus dem Fluidmodul 1 ausströmen.

Um zusätzlich metallische Partikel aus dem Fluid entfernen zu können, deren Größe insbesondere kleiner als die Filter- oder Porengröße des Filters 3.5 sind, umfasst das gezeigte Funktionselement 3.1 zusätzlich eine Magnetfalle 3.6. Diese als ein befestigungskappenseitiger und in den Filter 3.5 hineinragender Magnet ausgestaltete Magnetfalle 3.6 zieht ferromagnetische Partikel aus dem in den Filter 3.5 einströmenden Fluid an und entfernt diese so unabhängig davon, ob der Filter 3.5 diese mechanisch herausfiltern würde oder nicht. Die Magnetfalle 3.6 dient somit als ein zusätzlicher magnetostatischer Filter.

Bei dem in Fig. 12 gezeigten Filtermodul ermöglicht die erfindungsgemäße Montageschnittstelle 4 bei zuverlässiger Befestigung gleichwohl ein schnelles und einfaches Lösen der Funktionseinheit 3 von der Fluidführungseinheit 2, um den Filter 3.5 zu wechseln oder zu reinigen, und kann die Wartung des Fluidmoduls somit deutlich vereinfachen und beschleunigen.

In gleicher Weise wie der Filter 3.5 kann die in Fig. 12 gezeigte Befestigungskappe auch zur Befestigung und Sicherung anderer Funktionselemente 3.1 an der Fluidführungseinheit 2 genutzt werden, wie beispielsweise eines Temperatursensors, eines Druckfühlers, eines Durchflussmessers oder eines Leitwertsensors.

In Fig. 13 ist schließlich ein als manuell betätigbares Proportionalventil ausgestaltetes Fluidmodul 1 gezeigt. Die Funktionseinheit 3 dieses Fluidmoduls 1 weist neben der Befestigungskappe 9 ein manuell betätigbares Stellrad 3.12 auf, mit welchem der Durchfluss durch den Strömungskanal 2.2 des Fluidmoduls 1 eingestellt werden kann.

Als ein die Stellung des Proportionalitätsventils extern anzeigendes Element dient die Stellungsanzeige 3.13. Abhängig davon, wie weit die Stellungsanzeige 3.13 entlang der Aufnahmeachse A über das Stellrad 3.12 hinausragt, kann dabei die Position einer den Durchfluss durch die Fluidführungseinheit 2 beschränkten Regelkontur 3.14 und somit die Stärke der Durchflussreduzierung von außen abgelesen werden.

Im Längsschnitt gemäß Fig. 13b ist zu erkennen, dass bei dieser Funktionseinheit 3 ein Lagerelement 3.15 im Wesentlichen in gleicher Art und Weise zwischen der Befestigungskappe 9 und der Fluidführungseinheit 2 festgeklemmt ist, wie es obenstehend bereits im Zusammenhang mit der Fig. 12 für den Filter 3.5 beschrieben wurde. Dieses Lagerelement 3.15 dient zur axial beweglichen Lagerung des Funktionselements 3.1.

Das in Fig. 13b gezeigte Funktionselement 3.1 umfasst einen Plunger 3.3, welcher durch ein Drehen des Stellrads 3.12 um die Aufnahmeachse A parallel zur Aufnahmeachse A in Richtung des Ventilsitzes 2.6 oder von diesem weg bewegt werden kann.

An seinem dem Ventilsitz 2.6 zugewandten axialen Ende weist dieser Plunger 3.3 eine Regelkontur 3.14 auf. Mit dieser Regelkontur 3.14 kann das Funktionselement 3.1 axial in den radial innenliegenden Bereich des Ventilsitzes 2.6 eintauchen. Je tiefer die Regelkontur 3.14 in den Ventilsitz 2.6 eintaucht, umso stärker reduziert diese den durchströmbaren freien Querschnitt des die Regelkontur 3.14 umgebenden Strömungskanals 2.2 und reduziert somit den Durchfluss durch das Fluidmodul 1. Die Form der Regelkontur 3.14 ist dabei derart gewählt, dass die Drosselung des Durchflusses proportional zur Drehung des Stellrads 3.12 relativ zur Befestigungskappe 9 ist.

Die Regelkontur 3.14 kann derart ausgestaltet sein, dass sie in jener Endstellung, in welcher sie am tiefsten in den Ventilsitz 2.6 eintaucht, diesen vollständig schließt und somit nicht nur als ein Drosselmittel, sondern auch als ein Schließmittel dienen kann.

Die in Fig. 13 gezeigte manuelle Betätigung mittels eines Stellrads 3.12 kann auch in den Ausführungsbeispielen der Fig. 8 bis Fig. 11 alternativ zu den dort gezeigten Magnetspulen 3.2 genutzt werden. Auf diese Weise können diese Funktionseinheiten 3 auch rein manuell betätigbar ausgestaltet werden.

Mit Hilfe des vorstehend beschriebenen Fluidmoduls, dem Fluidmodul-System und dem beschriebenen Verfahren zur Verbindung der Funktionseinheit 3 und der Fluidführungseinheit 2 kann eine handhabungstechnisch einfache, schnell herzustellende und zugleich gegen ein unbeabsichtigtes Lösen gesicherte Verbindung der Fluidführungseinheit 2 mit der Funktionseinheit 3 ermöglicht werden.

### Bezugszeichen:

- 1: Fluidmodul
- 2: Fluidführungseinheit
- 2.1: Einlauf
- 2.2: Strömungskanal
- 2.3: Auslauf
- 2.4: Aufnahmebereich
- 2.5: Aufnahmeöffnung
- 2.6: Ventilsitz
- 2.7: Verstärkungsrippe
- 2.8: Vorsprung
- 3: Funktionseinheit
- 3.1: Funktionselement
- 3.2: Magnetspule
- 3.3: Plunger
- 3.4: Feder
- 3.5: Filter
- 3.6: Magnetfalle
- 3.7: Hutmutter
- 3.8: Schließmittel
- 3.9: Oberteil
- 3.10: Faltenbalg
- 3.11: Trennelement
- 3.12: Stellrad
- 3.13: Stellungsanzeige
- 3.14: Regelkontur
- 3.15: Lagerelement
- 4: Montageschnittstelle
- 4.1: Schnittstellenteil
- 4.2: Schnittstellenteil
- 5: Bajonett-Verschluss
- 5.1: Verschluss-Nase
- 5.2: Verschluss-Aussparung
- 5.3: Verschlussfläche
- 5.4: Anlaufschräge
- 5.5: Verschlussfläche
- 5.6: Anschlag
- 5.7: Aufnahmekanal
- 6: Rückdrehsicherung
- 7: Schnapphaken
- 7.1: Einschnappvorsprung
- 7.2: Betätigungsvorsprung
- 7.3: Sicherungsfläche
- 8: Einschnappausnehmung
- 8.1: Sicherungsfläche
- 9: Befestigungskappe
- 9.1: Wandung
- 10: Ausrücksicherung
- 10.1: Rastkontur
- 10.2: Rastkontur
- 10.3: Oberfläche der Einschnappausnehmung
- 10.4: Rastvorsprung
- 10.5: Rastausnehmung
- 11: Überbiegschutz
- 12: Anschlag
- 13: Verbindungsmittel
- 14: Dichtring
- 15: Lüftungsmittel
- 15.1: Lüftungsöffnung
- 15.2: Lüftungskanal
- 15.3: Ventilsitz
- A: Aufnahmeachse
- B: Betätigungsrichtung
- D: Drehrichtung
- E: Einschnapprichtung
- F: Strömungsrichtung
- L: Lüftungsrichtung
- M: Aufnahmerichtung
- R: Rastrichtung
- S: Sicherungsrichtung

## Patentansprüche

1. Fluidmodul (1) zur Verwendung in einem Fluidsystem, mit einer von einem Fluid durchströmbaren Fluidführungseinheit (2), welche einen anströmseitigen Einlauf (2.1), einen abströmseitigen Auslauf (2.3) und einen sich dazwischen erstreckenden Strömungskanal (2.2) aufweist, und einer Funktionseinheit (3), die über eine Montageschnittstelle (4) mit dem Strömungskanal (2.2) strömungsverbunden ist, wobei die Montageschnittstelle (4) einen Bajonett-Verschluss (5) und eine Rückdrehsicherung (6) zur werkzeuglosen Befestigung und Sicherung der Funktionseinheit (3) an der Fluidführungseinheit (2) aufweist,
**dadurch gekennzeichnet,**
**dass** die Rückdrehsicherung (6) einen im Wesentlichen entlang einer Einschnapprichtung (E) beweglichen Schnapphaken (7) und mindestens eine dem Schnapphaken (7) zugeordnete Einschnappausnehmung (8) zur formschlüssigen Aufnahme des Schnapphakens (7) aufweist.

2. Fluidmodul (1) nach Anspruch 1, **dadurch gekennzeichnet, dass** der Schnapphaken (7) schwenkbar oder biegbar an der Fluidführungseinheit (2) oder der Funktionseinheit (3) angeordnet ist.

3. Fluidmodul (1) nach einem der Ansprüche 1 oder 2, **dadurch gekennzeichnet, dass** der Schnapphaken (7) einstückig mit der Fluidführungseinheit (2) oder der Funktionseinheit (3) ausgestaltet ist.

4. Fluidmodul (1) nach einem der vorgehenden Ansprüche, **dadurch gekennzeichnet, dass** der Schnapphaken (7) einen, insbesondere quer zur Aufnahmeachse (A) hervorstehenden, Betätigungsvorsprung (7.2) zum manuellen Ausrücken des Schnapphakens (7) aus der Einschnappausnehmung (8) aufweist.

5. Fluidmodul (1) nach einem der vorhergehenden Ansprüche, **gekennzeichnet durch** einen Überbiegschutz (11) zur Verhinderung eines Überbiegens des Schnapphakens (7), insbesondere entgegen der Einschnapprichtung (E).

6. Fluidmodul (1) nach einem der vorhergehenden Ansprüche, **dadurch gekennzeichnet, dass** die Rückdrehsicherung (6) eine Ausrücksicherung (10) gegen ein überlastbedingtes unzulässiges Ausrücken von Komponenten der Rückdrehsicherung (6), insbesondere des Schnapphakens (7) aus der Einschnappausnehmung (8), aufweist.

7. Fluidmodul (1) nach Anspruch 6, **dadurch gekennzeichnet, dass** die Ausrücksicherung (10) eine Rastkontur (10.1) des Schnapphakens (7) und eine Rastkontur (10.2) der Einschnappausnehmung (8) umfasst, welche komplementär zueinander ausgestaltet sind.

8. Fluidmodul (1) nach Anspruch 7, **dadurch gekennzeichnet, dass** die Rastkontur (10.1) des Schnapphakens (7) an einem Einschnappvorsprung (7.1) und/oder die Rastkontur (10.2) der Einschnappausnehmung (8) an der dem Einschnappvorsprung (7.1) zugewandte Oberfläche (10.3) der Einschnappausnehmung (8) angeordnet ist.

9. Fluidmodul (1) nach einem der Ansprüche 7 oder 8, **dadurch gekennzeichnet, dass** die Rastkonturen (10.1, 10.2) entlang einer quer zur Aufnahmeachse (A) verlaufenden Rastrichtung (R) miteinander, insbesondere formschlüssig, verrastbar sind.

10. Fluidmodul (1) nach Anspruch 9, **dadurch gekennzeichnet, dass** die Rastrichtung (R) quer zu einer Sicherungsrichtung (S), entlang welcher ein Zurückdrehen des Bajonett-Verschlusses (5) durch die Rückdrehsicherung (6) verhinderbar ist, verläuft.

11. Fluidmodul (1) nach einem der Ansprüche 7 bis 10, **dadurch gekennzeichnet, dass** die Rastkontur (10.1) des Schnapphakens (7) derart ausgestaltet ist, dass sie die Rastkontur (10.2) der Einschnappausnehmung (8) aufnehmen kann, und/oder dass die Rastkontur (10.2) der Einschnappausnehmung (8) derart ausgestaltet ist, dass sie die Rastkontur (10.1) des Schnapphakens (7) aufnehmen kann.

12. Fluidmodul (1) nach einem der Ansprüche 7 bis 11, **dadurch gekennzeichnet, dass** die Rastkontur (10.1) des Schnapphakens (7) einen Rastvorsprung (10.4) und die Rastkontur (10.2) der Einschnappausnehmung (8) eine Rastausnehmung (10.5) aufweist und/oder die Rastkontur (10.2) der Einschnappausnehmung (8) einen Rastvorsprung (10.4) und die Rastkontur (10.1) des Schnapphakens (7) eine Rastausnehmung (10.5) aufweist.

13. Fluidmodul (1) nach einem der vorhergehenden Ansprüche, **dadurch gekennzeichnet, dass** der Bajonett-Verschluss (5) Verschluss-Nasen (5.1) mit Anlaufschrägen (5.4) zum Heranziehen der Funktionseinheit (3) an die Fluidführungseinheit (2) beim Schließen des Bajonett-Verschlusses (5) aufweist.

14. Fluidmodul-System umfassend mindestens eine Fluidführungseinheit (2) und unterschiedliche Funktionseinheiten (3) zur Umsetzung unterschiedlicher Funktionen in einem Fluidsystem, wobei die unterschiedlichen Funktionseinheiten (3) wahlweise mit der Fluidführungseinheit (2) zur Bildung eines Fluidmoduls (1) gemäß Anspruch 1 verbindbar sind.

15. Verfahren zur Verbindung einer Funktionseinheit (3) und einer Fluidführungseinheit (2) zu einem Fluidmodul (1) gemäß Anspruch 1, wobei die Funktionseinheit (3) entlang der Aufnahmeachse (A) auf die Fluidführungseinheit (2) aufgesteckt wird, so dass die Funktionseinheit (3) mit dem Strömungskanal (2.2) strömungsverbunden ist, und die Fluidführungseinheit (2) und die Funktionseinheit (3) durch Betätigung des Bajonett-Verschlusses (5) und der Rückdrehsicherung (6) rückdrehsicher aneinander befestigt und gesichert werden.

## Claims

1. Fluid module (1) for use in a fluid system, comprising a fluid guide unit (2) through which a fluid can flow, which has an inlet (2.1) on the inflow side, an outlet (2.3) on the outflow side and a flow channel (2.2) extending between them, and a functional unit (3) which is flow-connected to the flow channel (2.2) via a mounting interface (4), wherein the mounting interface (4) has a bayonet lock (5) and a reverse rotation lock (6) for tool-free fastening and securing of the functional unit (3) to the fluid guide unit (2),
**characterized in that**
the reverse rotation lock (6) has a snap hook (7) that is essentially movable along a snap-in direction (E) and at least one snap-in recess (8) associated with the snap hook (7) for form-fitting reception of the snap hook (7).

2. Fluid module (1) according to claim 1, **characterized in that** the snap hook (7) is arranged in a pivotable or bendable manner on the fluid guide unit (2) or the functional unit (3).

3. Fluid module (1) according to one of claims 1 or 2, **characterized in that** the snap hook (7) is formed in one piece with the fluid guide unit (2) or the functional unit (3).

4. Fluid module (1) according to one of the preceding claims, **characterized in that** the snap hook (7) has an actuating projection (7.2) protruding in particular transversely to the mounting axis (A) for manually disengaging the snap hook (7) from the snap-in recess (8).

5. Fluid module (1) according to one of the preceding claims, **characterized by** an overbending protection (11) for preventing the snap hook (7) from overbending, in particular against the snap-in direction (E).

6. Fluid module (1) according to one of the preceding claims, **characterized in that** the reverse rotation lock (6) has a disengagement lock (10) to prevent overload-induced impermissible disengagement of components of the reverse rotation lock (6), in particular the snap hook (7) from the snap-in recess (8).

7. Fluid module (1) according to claim 6, **characterized in that** the disengagement lock (10) comprises a locking contour (10.1) of the snap hook (7) and a locking contour (10.2) of the snap-in recess (8), which are designed to be complementary to each other.

8. Fluid module (1) according to claim 7, **characterized in that** the locking contour (10.1) of the snap hook (7) is arranged on a snap-in projection (7.1) and/or the locking contour (10.2) of the snap-in recess (8) is arranged on the surface (10.3) of the snap-in recess (8) facing the snap-in projection (7.1).

9. Fluid module (1) according to one of claims 7 or 8, **characterized in that** the locking contours (10.1, 10.2) can be locked together, in particular in a form-fit manner, along a locking direction (R) running transversely to the mounting axis (A).

10. Fluid module (1) according to claim 9, **characterized in that** the locking direction (R) runs transversely to a securing direction (S) along which a reverse rotation of the bayonet lock (5) can be prevented by the reverse rotation lock (6).

11. Fluid module (1) according to one of claims 7 to 10, **characterized in that** the locking contour (10.1) of the snap hook (7) is designed in such a way that it can accommodate the locking contour (10.2) of the snap-in recess (8), and/or that the locking contour (10.2) of the snap-in recess (8) is designed in such a way that it can accommodate the locking contour (10.1) of the snap hook (7).

12. Fluid module (1) according to one of claims 7 to 11, **characterized in that** the locking contour (10.1) of the snap hook (7) has a locking projection (10.4) and the locking contour (10.2) of the snap-in recess (8) has a locking recess (10.5) and/or the locking contour (10.2) of the snap-in recess (8) has a locking projection (10.4) and the locking contour (10.1) of the snap hook (7) has a locking recess (10.5).

13. Fluid module (1) according to one of the preceding claims, **characterized in that** the bayonet lock (5) has locking lugs (5.1) with run-up bevels (5.4) for pulling the functional unit (3) towards the fluid guide unit (2) when closing the bayonet lock (5).

14. Fluid module system comprising at least one fluid guide unit (2) and different functional units (3) for performing different functions in a fluid system, wherein the different functional units (3) can be selectively connected to the fluid guide unit (2) to form a fluid module (1) according to claim 1.

15. Method for connecting a functional unit (3) and a fluid guide unit (2) to form a fluid module (1) according to claim 1, wherein the functional unit (3) is pushed onto the fluid guide unit (2) along the mounting axis (A) so that the functional unit (3) is flow-connected to the flow channel (2.2), and the fluid guide unit (2) and the functional unit (3) are mounted and secured to each other in a non-rotatable manner by actuating the bayonet lock (5) and the reverse rotation lock (6).

## Revendications

1. Module fluidique (1) pour utilisation dans un système fluidique, avec une unité de guidage de fluide (2) pouvant être traversée par un fluide, qui présente une entrée côté amont (2.1), une sortie côté aval (2.3) et un canal d'écoulement (2.2) s'étendant entre celles-ci, et une unité fonctionnelle (3) qui est reliée en écoulement au canal d'écoulement (2.2) par l'intermédiaire d'une interface de montage (4), l'interface de montage (4) présentant une fermeture à baïonnette (5) et un dispositif anti-retour (6) pour la fixation et la sécurisation sans outil de l'unité fonctionnelle (3) sur l'unité de guidage de fluide (2),
**caractérisé**
**en ce que** le dispositif anti-retour (6) présente un crochet à encliquetage (7) mobile essentiellement le long d'une direction d'encliquetage (E) et au moins un évidement d'encliquetage (8) associé au crochet à encliquetage (7) pour recevoir le crochet à encliquetage (7) par complémentarité de forme.

2. Module fluidique (1) selon la revendication 1, **caractérisé en ce que** le crochet à encliquetage (7) est agencé de manière pivotante ou flexible sur l'unité de guidage de fluide (2) ou l'unité fonctionnelle (3).

3. Module fluidique (1) selon l'une quelconque des revendications 1 ou 2, **caractérisé en ce que** le crochet à encliquetage (7) est conçu d'un seul tenant avec l'unité de guidage de fluide (2) ou l'unité fonctionnelle (3).

4. Module fluidique (1) selon l'une quelconque des revendications précédentes, **caractérisé en ce que** le crochet à encliquetage (7) présente une saillie d'actionnement (7.2) faisant saillie notamment transversalement par rapport à l'axe de réception (A) pour désengager manuellement le crochet à encliquetage (7) de l'évidement d'encliquetage (8).

5. Module fluidique (1) selon l'une quelconque des revendications précédentes, **caractérisé par** une protection anti-flexion (11) destinée à empêcher une flexion excessive du crochet à encliquetage (7), notamment à l'encontre de la direction d'encliquetage (E).

6. Module fluidique (1) selon l'une quelconque des revendications précédentes, **caractérisé en ce que** le dispositif anti-retour (6) présente un dispositif anti-désengagement (10) contre un désengagement inadmissible, dû à une surcharge, des composants du dispositif anti-retour (6), notamment du crochet à encliquetage (7) hors de l'évidement d'encliquetage (8).

7. Module fluidique (1) selon la revendication 6, **caractérisé en ce que** le dispositif anti-dégagement (10) comprend un contour d'encliquetage (10.1) du crochet à encliquetage (7) et un contour d'encliquetage (10.2) de l'évidement d'encliquetage (8), qui sont conçus de manière complémentaire l'un par rapport à l'autre.

8. Module fluidique (1) selon la revendication 7, **caractérisé en ce que** le contour d'encliquetage (10.1) du crochet d'encliquetage (7) est agencé sur une saillie d'encliquetage (7.1) et/ou le contour d'encliquetage (10.2) de l'évidement d'encliquetage (8) est agencé sur la surface (10.3) de l'évidement d'encliquetage (8) tournée vers la saillie d'encliquetage (7.1).

9. Module fluidique (1) selon l'une quelconque des revendications 7 ou 8, **caractérisé en ce que** les contours d'encliquetage (10.1, 10.2) peuvent s'encliqueter les uns avec les autres, notamment par complémentarité de forme, le long d'une direction d'encliquetage (R) s'étendant transversalement à l'axe de réception (A).

10. Module fluidique (1) selon la revendication 9, **caractérisé en ce que** la direction d'encliquetage (R) s'étend transversalement à une direction de sécurisation (S) le long de laquelle un retour en rotation de la fermeture à baïonnette (5) peut être empêché par le dispositif anti-retour (6).

11. Module fluidique (1) selon l'une quelconque des revendications 7 à 10, **caractérisé en ce que** le contour d'encliquetage (10.1) du crochet d'encliquetage (7) est conçu de manière à pouvoir recevoir le contour d'encliquetage (10.2) de l'évidement d'encliquetage (8), et/ou **en ce que** le contour d'encliquetage (10.2) de l'évidement d'encliquetage (8) est conçu de manière à pouvoir recevoir le contour d'encliquetage (10.1) du crochet d'encliquetage (7).

12. Module fluidique (1) selon l'une quelconque des revendications 7 à 11, **caractérisé en ce que** le contour d'encliquetage (10.1) du crochet d'encliquetage (7) présente une saillie d'encliquetage (10.4) et le contour d'encliquetage (10.2) de l'évidement d'encliquetage (8) présente un évidement d'encliquetage (10.5) et/ou le contour d'encliquetage (10.2) de l'évidement d'encliquetage (8) présente une saillie d'encliquetage (10.4) et le contour d'encliquetage (10.1) du crochet d'encliquetage (7) présente un évidement d'encliquetage (10.5).

13. Module fluidique (1) selon l'une quelconque des revendications précédentes, **caractérisé en ce que** la fermeture à baïonnette (5) présente des ergots de fermeture (5.1) avec des biseaux d'attaque (5.4) pour rapprocher l'unité fonctionnelle (3) de l'unité de guidage de fluide (2) lors de la fermeture de la fermeture à baïonnette (5).

14. Système de module fluidique comprenant au moins une unité de guidage de fluide (2) et différentes unités fonctionnelles (3) pour la mise en œuvre de différentes fonctions dans un système fluidique, les différentes unités fonctionnelles (3) pouvant être reliées au choix à l'unité de guidage de fluide (2) pour former un module fluidique (1) selon la revendication 1.

15. Procédé pour relier une unité fonctionnelle (3) et une unité de guidage de fluide (2) en un module fluidique (1) selon la revendication 1, dans lequel l'unité fonctionnelle (3) est emboîtée sur l'unité de guidage de fluide (2) le long de l'axe de réception (A) de telle sorte que l'unité fonctionnelle (3) soit reliée en écoulement au canal d'écoulement (2.2), et l'unité de guidage de fluide (2) et l'unité fonctionnelle (3) sont fixées et sécurisées l'une à l'autre de manière à ne pas pouvoir tourner en arrière par actionnement de la fermeture à baïonnette (5) et du dispositif anti-retour (6).
